# EUROPEAN PATENT APPLICATION

(11) **EP 2 151 603 A1**
(43) Date of publication of application: **10.02.2010**
(21) Application number: 08827752.0
(22) Date of filing: 13.08.2008
(51) Int. Cl.: F16H 3/093, B62J 99/00, B62M 11/06, F16H 3/083, F16H 61/04, F16H 59/24, F16H 59/44, F16H 61/682

(54) **POWER UNIT AND MOTORCYCLE WITH THE SAME**

(30) Priority: 21.08.2007 JP 2007214313; 08.08.2008 JP 2008204931
(71) Applicant: Yamaha Hatsudoki Kabushiki Kaisha, Iwata-shi, Shizuoka 438-8501 (JP)
(72) Inventor: OISHI, Akifumi, Iwata-shi Shizuoka 438-8501 (JP); MURAYAMA, Takuji, Iwata-shi Shizuoka 438-8501 (JP); HATA, Shinichiro, Iwata-shi Shizuoka 438-8501 (JP)
(74) Representative: Zimmermann, Tankred Klaus
(86) International application number: PCT/JP2008/064509
(87) International publication number: WO 2009/025213

(57) **Abstract**

[Task] To provide a power unit having a stepped automatic transmission in which a plurality of shift clutches are arranged on an input shaft connected to a crank shaft, the power unit having a simple configuration and an axial size of the crank shaft being small.

[Means for Resolution] An engine unit 20 is attached so that at least a part of a rear wheel 18 is located on the outside of a crank pin 34c in a vehicle width direction at a position in rear of a crank shaft 34 and on the inside of a transmission 31 in the vehicle width direction. An input shaft 52 is provided with a first clutch 55, a second clutch 59, a first pair of shift gears 86, and a second pair of shift gears 83. A third kick gear 111 directly or indirectly meshes with a portion on the inside of a first shift gear 58 of the crank shaft 34 in the vehicle width direction. At least a part of a second shift gear 63 is located on the outside of an inner wall 11d in the vehicle width direction.

## Description

### [Technical Field]

The present invention relates to a power unit and a motorcycle having the same.

### [Background Art]

In a motorcycle, it is possible to change a direction in such a manner that a rider inclines a vehicle body. For this reason, in the motorcycle, it is desirable that a vehicle width is narrow. Additionally, in recent years, a demand for the motorcycle using an automatic transmission has been increased. Accordingly, a stepped automatic transmission has been demanded which is slim in the vehicle width direction.

For example, Patent Document 1 discloses the motorcycle using a three-speed stepped automatic transmission. In Patent Document 1, a plurality of clutches of the stepped automatic transmission is arranged in a longitudinal direction. Accordingly, the stepped automatic transmission is realized which has a comparatively small width.
[Patent Document 1] JP-UM-A-62-23349

### [Disclosure of the Invention]

### [Problem that the Invention is to Solve]

Incidentally, in the stepped automatic transmission disclosed in Patent Document 1, a planetary gear having a plurality of shift clutches is provided on a crank shaft. With such a planetary gear, it is possible to perform a speed change only on the crank shaft. However, the planetary gear has a comparatively complex configuration. Accordingly, the configuration of the automatic transmission becomes complex.

Additionally, since the planetary gear having the complex configuration is disposed on the crank shaft, the axial size of the stepped automatic transmission of the crank shaft becomes large. Particularly, in the stepped automatic transmission disclosed in Patent Document 1, a gear to which rotation is transmitted from a kick shaft is provided on the outside of the planetary gear of the crank shaft in the vehicle width direction. Accordingly, the stepped automatic transmission disclosed in Patent Document 1 has such a problem that the axial size of the stepped automatic transmission of the crank shaft is particularly large.

The invention is contrived in consideration of the above-described problems, and an object of the invention is to provide a power unit having a stepped automatic transmission in which a plurality of shift clutches are arranged on an input shaft connected to a crank shaft, the power unit having a simple configuration and an axial size of the crank shaft being small.

### [Means for Solving the Problem]

A power unit according to the invention includes a stepped automatic transmission and a casing. The stepped automatic transmission includes a crank shaft, an input shaft, and an output shaft. The crank shaft includes a crank pin. The crank pin is connected to a connecting rod. The input shaft is connected to the crank shaft. The casing accommodates the crank shaft and the stepped automatic transmission. The power unit according to the invention is attached to a motorcycle so that at least a part of a wheel of the motorcycle is located on the outside of the crank pin in a vehicle width direction at a position in rear of the crank shaft and on the inside of the stepped automatic transmission in the vehicle width direction.

The casing includes a transmission accommodation part. The transmission accommodation part has a transmission housing formed therein. The transmission housing accommodates the stepped automatic transmission. The transmission accommodation part includes an inner wall and an outer wall. The inner wall is located on the inside of the stepped automatic transmission in the vehicle width direction and on the outside of the wheel in the vehicle width direction. The outer wall is located on the outside of the stepped automatic transmission in the vehicle width direction.

The stepped automatic transmission includes a first rotation shaft, a first clutch, a first pair of gears, a second pair of gears, a second clutch, and a power transmission mechanism. The first rotation shaft is disposed between the input shaft and the output shaft. The first clutch includes an input-side clutch member and an output-side clutch member. The input-side clutch member rotates together with the input shaft. The output-side clutch member is rotatable with respect to the input shaft. The first pair of gears includes a first shift gear and a second shift gear. The first shift gear rotates together with the output-side clutch member of the first clutch. The second shift gear is disposed on the first rotation shaft. The second shift gear meshes with the first shift gear. The first pair of gears transmits a rotation of the input shaft to the first rotation shaft, but does not transmit the rotation of the first rotation shaft to the input shaft. A second pair of gears includes a third shift gear and a fourth shift gear. The third shift gear is disposed on the input shaft. The third shift gear is rotatable with respect to the input shaft. The fourth shift gear meshes with the third shift gear. The fourth shift gear rotates together with the first rotation shaft. The second pair of gears has a gear ratio smaller than that of the first pair of gears. A second clutch includes an input-side clutch member and an output-side clutch member. The input-side clutch member rotates together with the third shift gear. The output-side clutch member rotates together with the first shift gear. The second clutch is engaged at a rotation speed larger than a rotation speed of the input shaft upon engaging with the first clutch. The power transmission mechanism transmits a rotation of the first rotation shaft to the output shaft.

The power unit according to the invention includes a kick shaft, a kick pedal, an intermediate shaft, a pair of kick transmission gears, and a third kick gear. The kick shaft is rotatably supported to the outer wall. The kick pedal rotates together with the kick shaft. The intermediate shaft is disposed between the kick shaft and the crank shaft. The pair of kick transmission gears includes a first kick gear and a second kick gear. The first kick gear is provided in the kick shaft. The first kick gear is disposed on the outside of the first and second pairs of gears in the vehicle width direction. The second kick gear is provided in the intermediate shaft. The second kick gear meshes with the first kick gear. The pair of kick transmission gears transmits a rotation of the kick shaft to the intermediate shaft. The third kick gear directly or indirectly meshes with a portion on the inside of the first shift gear of the crank shaft in a vehicle width direction. The third kick gear transmits a rotation of the intermediate shaft to the crank shaft.

In the power unit according to the invention, at least a part of the second shift gear is located on the outside of the inner wall in the vehicle width direction.

The motorcycle according to the invention includes the power unit according to the invention.

### [Advantage of the Invention]

According to the invention, it is possible to provide the power unit having the stepped automatic transmission in which the plurality of transmission clutches is arranged on the input shaft connected to the crank shaft, the power unit having the simple configuration and the axial size of the crank shaft being small.

### [Brief Description of the Drawings]

[FIG. 1] FIG. 1 is a left side view of a scooter type vehicle according to an embodiment.
[FIG. 2] FIG. 2 is a cross sectional view of an engine unit.
[FIG. 3] FIG. 3 is a partial cross sectional view of the engine unit.
[FIG. 4] FIG. 4 is a schematic diagram showing the structure of the engine unit.
[FIG. 5] FIG. 5 is a schematic partial cross sectional view illustrating the arrangement of rotation shafts of the engine unit.
[FIG. 6] FIG. 6 is a partial cross sectional view of the engine unit showing the structure of a group of clutches on the downstream side.
[FIG. 7] FIG. 7 is a conceptual diagram showing an oil circuit.
[FIG. 8] FIG. 8 is a partial cross sectional view of the engine unit illustrating an oil filter etc.
[FIG. 9] FIG. 9 is a schematic diagram illustrating a power transmission path in the first speed in a transmission.
[FIG. 10] FIG. 10 is a schematic diagram illustrating a power transmission path in the second speed in the transmission.
[FIG. 11] FIG. 11 is a schematic diagram illustrating a power transmission path in the third speed in the transmission.
[FIG. 12] FIG 12 is a schematic diagram illustrating a power transmission path in the fourth speed in the transmission.
[FIG. 13] FIG. 13 is a cross sectional view of the engine unit according to the embodiment.
[FIG. 14] FIG. 14 is a partial cross sectional view of the engine unit according to the second embodiment.
[FIG. 15] FIG. 15 is a schematic diagram showing the structure of an engine unit according to a first modified example.
[FIG. 16] FIG. 16 is a schematic diagram showing the structure of an engine unit according to a second modified example.
[FIG. 17] FIG. 17 is a schematic diagram showing the structure of an engine unit according to a third modified example.
[FIG. 18] FIG. 18 is a schematic diagram showing the structure of an engine unit according to a fourth modified example.

### [Description of Reference Numerals and Signs]

- 1:: SCOOTER TYPE VEHICLE (MOTORCYCLE)
- 11:: CASING
- 11a:: TRANSMISSION ACCOMMODATING PART
- 11c:: OUTER WALL
- 11d:: INNER WALL
- 18:: REAR WHEEL (WHEEL)
- 20:: ENGINE UNIT (POWER UNIT)
- 24:: KICK PEDAL
- 29:: POWER TRANSMISSION MECHANISM
- 30:: ENGINE
- 31:: TRANSMISSION
- 33:: OUTPUT SHAFT
- 34:: CRANK SHAFT
- 34c:: CRANK PIN
- 36:: CONNECTING ROD
- 47:: A PAIR OF KICK-TRANSMISSION GEARS
- 51:: TRANSMISSION HOUSING
- 52:: INPUT SHAFT
- 53:: FIRST ROTATION SHAFT
- 55:: FIRST CLUTCH
- 56:: INNER (INPUT-SIDE CLUTCH MEMBER)
- 57:: OUTER (OUTPUT-SIDE CLUTCH MEMBER)
- 58:: FIRST GEAR (FIRST SHIFT GEAR)
- 59:: SECOND CLUTCH
- 60:: INNER (INPUT-SIDE CLUTCH MEMBER)
- 61:: OUTER (OUTPUT-SIDE CLUTCH MEMBER)
- 62:: ELEVENTH GEAR (THIRD SHIFT GEAR)
- 63:: SECOND GEAR (SECOND SHIFT GEAR)
- 65:: TWELFTH GEAR (FOURTH SHIFT GEAR)
- 83:: FOURTH PAIR OF SHIFT GEARS (SECOND PAIR OF GEARS)
- 86:: FIRST PAIR OF SHIFT GEARS (FIRST PAIR OF GEARS)
- 101:: STARTER
- 102:: KICK SHAFT
- 104:: GEAR (FIRST KICK GEAR)
- 105:: SHAFT (INTERMEDIATE SHAFT)
- 106:: GEAR (SECOND KICK GEAR)
- 111:: GEAR (THIRD KICK GEAR)
- 115:: BALANCER SHAFT (ANOTHER INTERMEDIATE SHAFT)
- 116:: GEAR (FOURTH KICK GEAR)
- 117:: GEAR (SIXTH KICK GEAR)
- 120:: GEAR (STARTER GEAR)
- 129:: GEAR (FIFTH KICK GEAR)

### [Best Mode for Carrying Out the Invention]

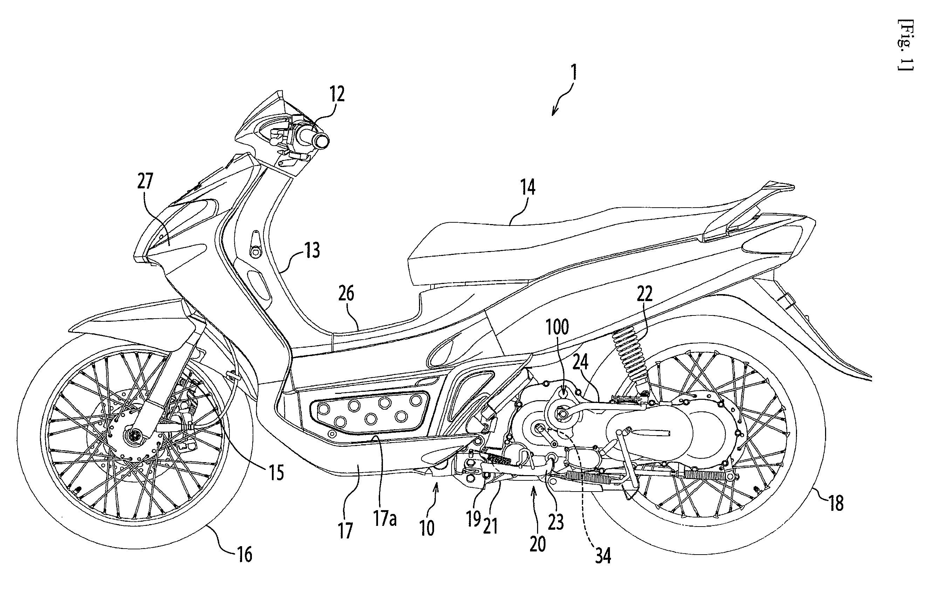

In this embodiment, as an example of a motorcycle to which the invention is applied, a scooter type vehicle 1 shown in FIG. 1 is used to explain a preferred embodiment of the invention. Note that, in the invention, the "motorcycle" is not limited to a scooter type vehicle. The term "motorcycle" indicates a motorcycle defined in a broad sense. More specifically, in the specification, the term "motorcycle" indicates any vehicle that changes direction by banking the vehicle. At least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

### (Schematic structure of the scooter type vehicle 1)

First, the schematic structure of the scooter type vehicle 1 will be explained with reference to FIG. 1. Note that the terms front and rear, and left and right as used in the following description indicate the front and rear and the left and right as viewed by a rider seated on a seat 14 of the scooter type vehicle 1.

The scooter type vehicle 1 includes a body frame 10. The body frame 10 includes a head pipe (not shown). The head pipe extends downward from the front part of the vehicle to the front side in a slightly inclined direction. A steering shaft (not shown) is rotatably inserted in the head pipe. The upper end portion of the steering shaft is provided with a handle 12. Meanwhile, the lower end portion of the steering shaft is connected to a front fork 15. The lower end portion of the front fork 15 is rotatably attached with a front wheel 16 as a driven wheel.

A body cover 13 is attached to the body frame 10. The body cover 13 covers a part of the body frame 10. The body cover 13 includes a leg shield 27. The leg shield 27 covers the front of the vehicle. Further, the body cover 13 is disposed to the rear of the leg shield 27, and includes foot rests 17 that are provided on the left and right sides of the vehicle. Foot rest surfaces 17a are formed on the foot rests 17. The rider's feet are placed on the foot rest surfaces 17a.

A center cover 26 that is a part of the body cover 13 is provided between the left and right foot rests 17. The center cover 26 protrudes upward from the foot rest surfaces 17a of the foot rests 17, and is formed in a tunnel shape extending in the front-rear direction. The seat 14 on which the rider sits is attached to a section of the body cover 13 located to the rear of the center cover 26. Further, a side stand 23 is attached to the body frame 10 substantially at the center of the vehicle.

An engine unit 20 is swingably suspended from the body frame 10. More specifically, the engine unit 20 is a swing unit type engine. An engine bracket 21 is integrally connected to the engine unit 20. The engine unit 20 is swingably attached to a pivot shaft 19 of the body frame 10 via the engine bracket 21. Further, one end of a cushion unit 22 is attached to the engine unit 20. The other end of the cushion unit 22 is attached to the rear of the body frame 10. The swinging movement of the engine unit 20 is suppressed by the cushion unit 22.

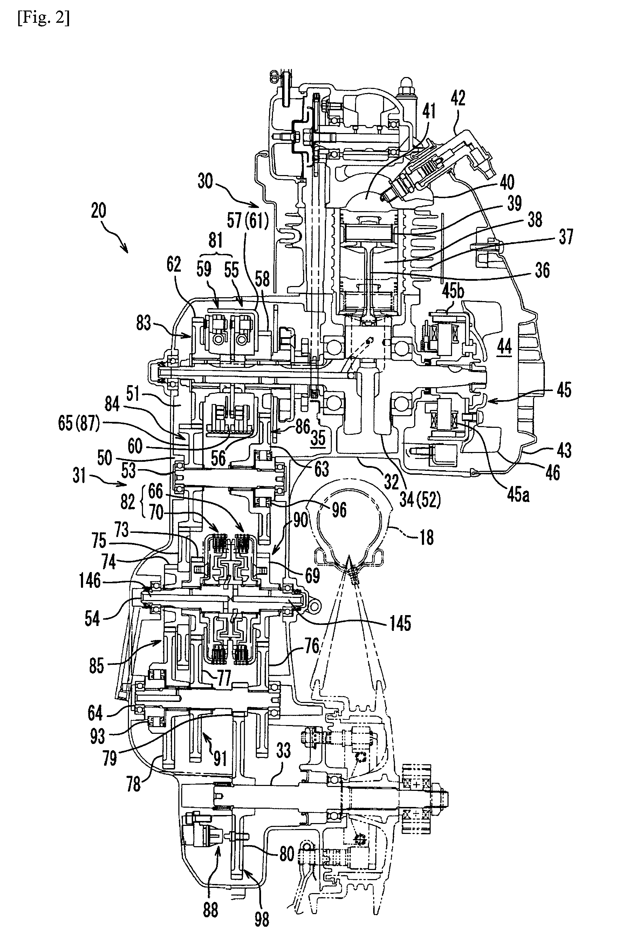

The engine unit 20 includes an output shaft 33 (refer to FIG. 2) that outputs power generated in the engine unit 20. A rear wheel 18 is attached to the output shaft 33. Accordingly, the rear wheel 18 is driven by the power generated in the engine unit 20. That is, the rear wheel 18 is a driving wheel in the first embodiment.

As shown in FIG. 2, in this embodiment, a vehicle speed sensor 88 is provided on the output shaft 33. More specifically, the vehicle speed sensor 88 is provided on a fourteenth gear 80 that rotates together with the output shaft 33. Note that the vehicle speed sensor 88 may be provided on a rotation shaft other than the output shaft 33, and may be provided on another member that rotates at a certain rotation speed ratio with respect to the output shaft 33.

### (Structure of the engine unit 20)

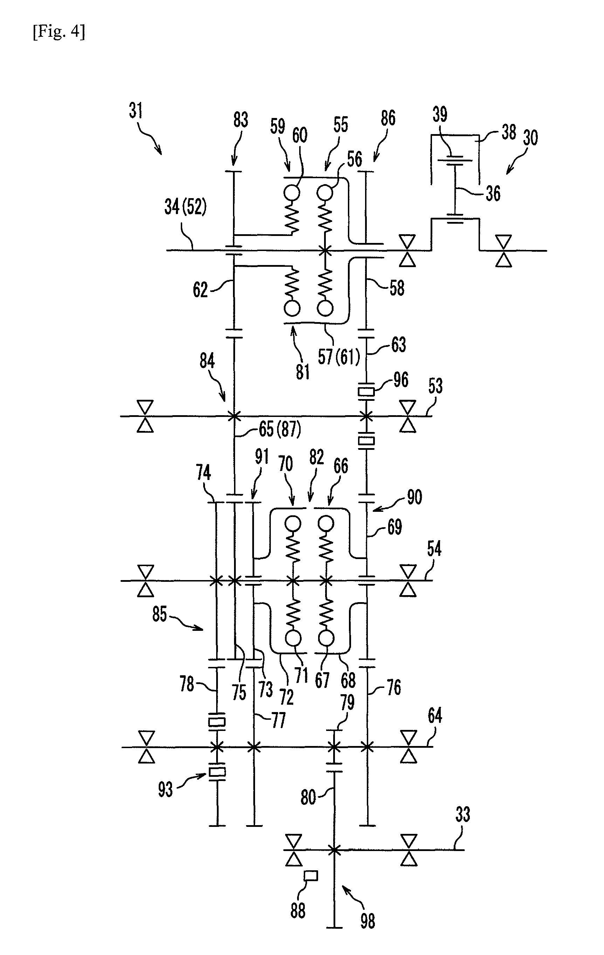

FIG. 2 is a cross sectional view of the engine unit 20. FIG. 4 is a schematic diagram showing the structure of the engine unit 20. As shown in FIG. 2, the engine unit 20 includes an engine 30 and a transmission 31. Note that, in the first embodiment, an example is described in which the engine 30 is a single cylinder engine. However, in the invention, the engine 30 is not limited to a single cylinder engine. The engine 30 may be a multi-cylinder engine, such as a two cylinder engine.

### - Engine 30 -

The engine 30 includes a crank case 32, a cylinder body 37, a cylinder head 40, and a crank shaft 34. A crank chamber 35 is formed within and defined by the crank case 32. A cylinder 38 that opens into the crank chamber 35 is formed within and defined by the cylinder body 37. The cylinder head 40 is attached to the upper end of the cylinder body 37. The crank shaft 34 that extends in the vehicle width direction is disposed in the crank chamber 35. A connecting rod 36 is attached to the crank shaft 34. A piston 39 disposed in the cylinder 38 is attached to the tip end of the connecting rod 36. A combustion chamber 41 is defined by the piston 39, the cylinder body 37, and the cylinder head 40. A spark plug 42 is attached to the cylinder head 40 such that an ignition section at the tip end of the spark plug 42 is located in the combustion chamber 41.

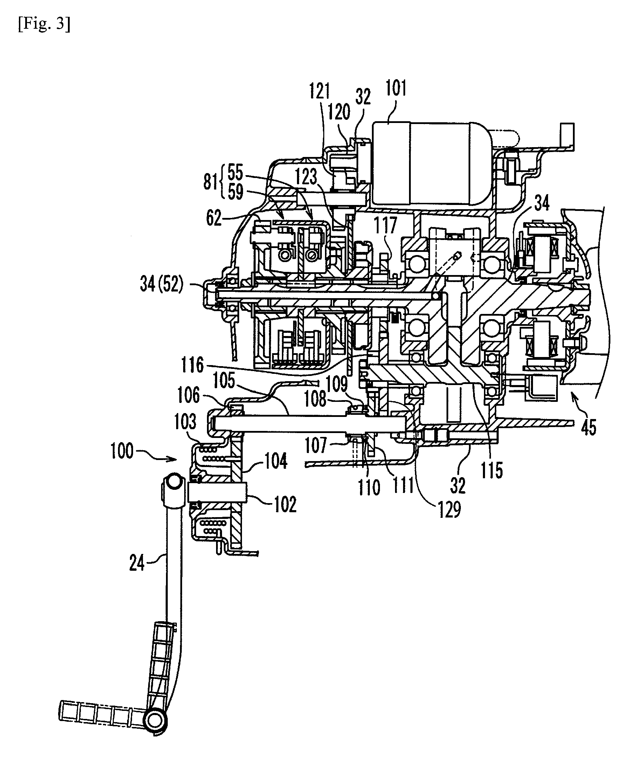

FIG. 3 is a partial cross sectional view of the engine unit 20, which shows a kick starter 100 and a starter 101. As shown in FIG. 1 and FIG. 3, the engine unit 20 is provided with the kick starter 100. The rider of the scooter type vehicle 1 operates the kick starter 100 to start the engine 30.

The kick starter 100 includes a kick pedal 24. As shown in FIG. 1, the kick pedal 24 is provided to the rear of and above the crank shaft 34, on the left side of the crank case 32. As shown in FIG. 3, the kick pedal 24 is attached to a kick shaft 102. A compression coil spring 103 is provided between the kick shaft 102 and the crank case 32. The compression coil spring 103 applies, to the kick shaft 102 rotated by the rider ' s operation, an urging force in a reverse rotating direction. Further, a gear 104 is provided on the kick shaft 102. Furthermore, a gear 106 is provided such that it cannot rotate with respect to a shaft 105. The gear 104 meshes with the gear 106. Rotation of the kick shaft 102 is transmitted to the crank shaft 34 by the gear 104 etc.

A ratchet 107 is formed on the shaft 105. A ratchet 108 is attached to a section of the shaft 105 where the ratchet 107 is formed. When the shaft 105 rotates, the ratchet 108 is guided by the ratchet 107, and moves to the right in the axial direction of the shaft 105. On the other hand, when the shaft 105 rotates in the reverse direction by the urging force of the compression coil spring 103, the ratchet 108 is guided by the ratchet 107, and moves to the left in the axial direction of the shaft 105.

An engagement section 109 is formed on the right end face of the ratchet 108. Moreover, an engagement section 110 is formed on the left end face of a gear 111 rotatably provided on the shaft 105. The engagement section 109 of the ratchet 108 engages with the engagement section 110 when the ratchet 108 moves to the right. Thus, when the ratchet 108 moves to the right, rotation of the shaft 105 is transmitted to the gear 111. The gear 111 meshes with a gear 116 formed on a balancer shaft 115. Further, a gear 129 is provided on the balancer shaft 115. The gear 129 rotates together with the balancer shaft 115. The gear 129 meshes with a gear 117 formed on the crank shaft 34. Thus, rotation of the gear 111 is transmitted to the crank shaft 34 via the balancer shaft 115. Accordingly, when the kick pedal 24 is operated, the crank shaft 34 rotates and the engine 30 is started.

Note that, in a plan view, the kick shaft 102 extends toward the center of the vehicle such that it straddles the transmission 31. That is, as shown in FIG. 3, the kick shaft 102 extends from the left side in the vehicle width direction toward the center of the vehicle, and is disposed such that the kick shaft 102 is aligned with a section of the transmission 31 in the up-down direction.

In addition, the starter 101 is also provided in the engine 30. The starter 101 is attached to the crank case 32. The rotation of the starter 101 is transmitted to the crank shaft 34 via gears 120, 121, and 122. Thus, when the starter 101 is driven by the rider's operation, the engine 30 is started.

### - Generator 45 -

A generator cover 43 is attached to the right side of the crank case 32. A generator housing 44 is defined by the generator cover 43 and the crank case 32.

The right end of the crank shaft 34 protrudes from the crank chamber 35 and reaches the generator housing 44. In the generator housing 44, the generator 45 is attached to the right end of the crank shaft 34. The generator 45 includes an inner 45a and an outer 45b. The inner 45a is attached such that it cannot rotate with respect to the crank case 32. On the other hand, the outer 45b is attached to the right end of the crank shaft 34. The outer 45b rotates together with the crank shaft 34. Accordingly, when the crank shaft 34 rotates, the outer 45b rotates relatively to the inner 45a. Thus, power is generated. Note that a fan 46 is provided on the outer 45b. The fan 46 rotates together with the crank shaft 34, thereby cooling the engine 30.

A transmission cover 50 is attached to the left side of the crank case 32. The transmission cover 50 and the crank case 32 define a transmission housing 51 located on the left side of the crank case 32.

### - Structure of the transmission 31 -

Next, mainly referring to FIG. 4, the structure of the transmission 31 will be described in detail. The transmission 31 is a four-speed stepped automatic transmission that includes an input shaft 52 and the output shaft 33. The transmission 31 is a gear train stepped transmission in which power is transmitted from the input shaft 52 to the output shaft 33 via a plurality of pairs of shift gears.

As shown in FIG. 2, the left end of the crank shaft 34 protrudes from the crank chamber 35, and reaches the transmission housing 51. The crank shaft 34 also serves as the input shaft 52 of the transmission 31.

### - Structure of the rotation shafts -

The transmission 31 has a first rotation shaft 53, a second rotation shaft 54, a third rotation shaft 64, and the output shaft 33. The first rotation shaft 53, the second rotation shaft 54, the third rotation shaft 64, and the output shaft 33 are respectively provided in parallel with the input shaft 52.

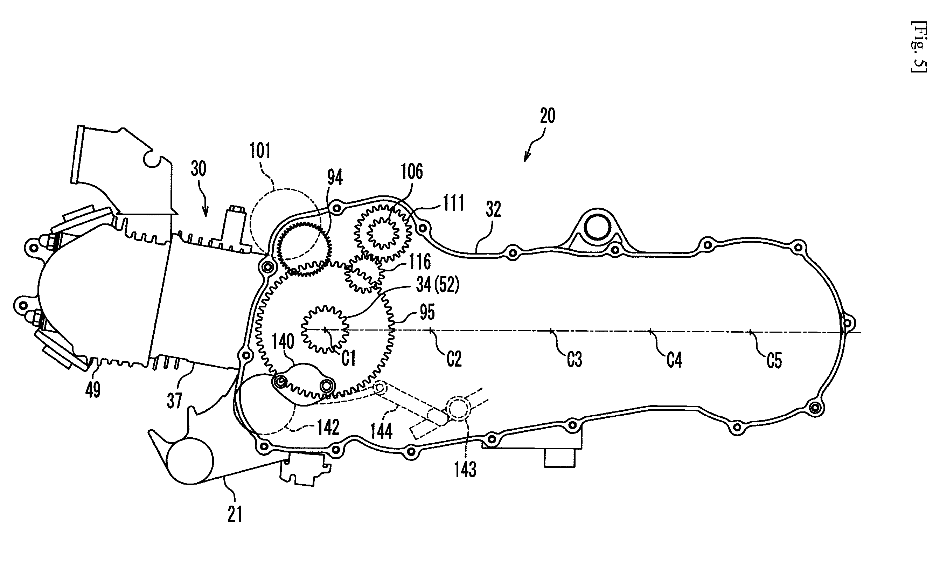

In FIG. 5, the reference numerals C1, C2, C3, C4, and C5 respectively represent the axis of the input shaft 52, the axis of the first rotation shaft 53, the axis of the second rotation shaft 54, the axis of the third rotation shaft 64, and the axis of the output shaft 33. As shown in FIG. 5, in a side view, the input shaft 52, the first rotation shaft 53, the second rotation shaft 54, the third rotation shaft 64, and the output shaft 33 are arranged in a generally horizontal direction orthogonal to the axial direction of the input shaft 52. More specifically, the axis C1 of the input shaft 52, the axis C2 of the first rotation shaft 53, the axis C3 of the second rotation shaft 54, the axis C4 of the third rotation shaft 64, and the axis C5 of the output shaft 33 are arranged in a generally horizontal line in a side view. By arranging the respective rotation shafts in this manner, the distance between the input shaft 52 and the output shaft 33 can be made relatively long. Note that, in FIG. 5, the reference numeral 94 denotes an idle gear. The reference numeral 95 denotes a one-way gear for the starter.

Note that, in the first embodiment, an example will be described in which the output shaft 33 and the third rotation shaft 64 are separately provided. However, the invention is not limited to this structure. The output shaft 33 and the third rotation shaft 64 may be the same shaft. In other words, the rear wheel 18 may be attached to the third rotation shaft 64.

### - A group of clutches 81 on the upstream side -

The input shaft 52 is provided with a group of clutches 81 on the upstream side. The group of clutches 81 on the upstream side includes a first clutch 55 and a second clutch 59. The first clutch 55 is disposed on the right side of the second clutch 59. The first clutch 55 and the second clutch 59 are centrifugal clutches. More specifically, in the first embodiment, the first clutch 55 and the second clutch 59 are drum type centrifugal clutches. However, the invention is not limited to this structure. The second clutch 59 may be a clutch other than a centrifugal clutch. For example, the second clutch 59 may be a hydraulic clutch.

The first clutch 55 includes an inner 56 as an input side clutch member, and an outer 57 as an output side clutch member. The inner 56 is provided such that it cannot rotate with respect to the input shaft 52. Accordingly, the inner 56 rotates together with the input shaft 52. On the other hand, the outer 57 can rotate with respect to the input shaft 52. When the rotation speed of the input shaft 52 becomes higher than a predetermined rotation speed, the inner 56 and the outer 57 come into contact due to centrifugal force acting on the inner 56. Thus, the first clutch 55 is engaged. Note that, when the inner 56 and the outer 57 are rotating in the engaged state, if the rotation speed thereof becomes lower than the predetermined rotation speed, the centrifugal force acting on the inner 56 is reduced. As a result, the inner 56 and the outer 57 separate. Thus, the first clutch 55 is disengaged.

The second clutch 59 includes an inner 60 as an output side clutch member, and an outer 61 as an input side clutch member. The inner 60 is provided such that it cannot rotate with respect to an eleventh gear 62 to be described later. When the input shaft 52 rotates, the rotation is transmitted to the inner 60 via a first pair of shift gears 86, the first rotation shaft 53, and a fourth pair of shift gears 83. Accordingly, the inner 60 rotates together with the rotation of the input shaft 52. The outer 61 can rotate with respect to the input shaft 52. When the rotation speed of the input shaft 52 becomes higher than a predetermined rotation speed, the inner 60 and the outer 61 come into contact due to centrifugal force acting on the inner 60. Thus, the second clutch 59 is engaged. Note that, when the inner 60 and the outer 61 are rotating in the engaged state, if the rotation speed thereof becomes lower than the predetermined rotation speed, the centrifugal force acting on the inner 60 is reduced. As a result, the inner 60 and the outer 61 separate. Thus, the second clutch 59 is disengaged.

Note that, in the first embodiment, the outer 57 and the outer 61 are formed by the same member. However, the invention is not limited to this structure. The outer 57 and the outer 61 may be formed by separate members.

The rotation speed of the input shaft 52 when the first clutch 55 is engaged, and the rotation speed of the input shaft 52 when the second clutch 59 is engaged are different from each other. In other words, the rotation speed of the inner 56 when the first clutch 55 is engaged, and the rotation speed of the inner 60 when the second clutch 59 is engaged are different from each other. More specifically, the rotation speed of the input shaft 52 when the first clutch 55 is engaged is lower than the rotation speed of the input shaft 52 when the second clutch 59 is engaged. To be even more specific, the first clutch 55 is engaged when the rotation speed of the input shaft 52 is equal to or higher than a first rotation speed. On the other hand, the first clutch 55 is disengaged when the rotation speed of the input shaft 52 is lower than the first rotation speed. The second clutch 59 is engaged when the rotation speed of the input shaft 52 is equal to or higher than a second rotation speed that is higher than the first rotation speed. On the other hand, the second clutch 59 is disengaged when the rotation speed of the input shaft 52 is lower than the second rotation speed.

A first gear 58 is provided on the outer 57 of the first clutch 55 such that it cannot rotate with respect to the outer 57. The first gear 58 rotates together with the outer 57 of the first clutch 55. On the other hand, a second gear 63 is provided on the first rotation shaft 53. The second gear 63 meshes with the first gear 58. The first gear 58 and the second gear 63 form the first pair of shift gears 86. In this embodiment, the first pair of shift gears 86 is a pair of first speed shift gears.

The second gear 63 is a one-way gear. More specifically, the second gear 63 transmits the rotation of the first gear 58 to the first rotation shaft 53. On the other hand, the second gear 63 does not transmit the rotation of the first rotation shaft 53 to the input shaft 52. That is, the second gear 63 also serves as a one-way rotation transmission mechanism 96.

The eleventh gear 62 is provided on the inner 60 that is an output side clutch member of the second clutch 59. The eleventh gear 62 rotates together with the inner 60. In addition, a twelfth gear 65 is provided on the first rotation shaft 53. The twelfth gear 65 meshes with the eleventh gear 62. The twelfth gear 65 and the eleventh gear 62 form the fourth pair of shift gears 83. The fourth pair of shift gears 83 has a gear ratio different from that of the first pair of shift gears 86. More specifically, the fourth pair of shift gears 83 has a gear ratio smaller than that of the first pair of shift gears 86. The fourth pair of shift gears 83 is a pair of second speed shift gears.

Between the first pair of shift gears 86 and the fourth pair of shift gears 83, the first clutch 55 and the second clutch 59 are located. In other words, the first clutch 55 and the second clutch 59 are disposed between the first pair of shift gears 86 and the fourth pair of shift gears 83.

In this embodiment, the twelfth gear 65 also functions as a ninth gear 87. In other words, the twelfth gear 65 and the ninth gear 87 are common. A tenth gear 75 is provided on the second rotation shaft 54 such that the tenth gear 75 cannot rotate with respect to the second rotation shaft 54. The tenth gear 75 rotates together with the second rotation shaft 54. The ninth gear 87 that also functions as the twelfth gear 65 meshes with the tenth gear 75. The ninth gear 87 that also functions as the twelfth gear 65 and the tenth gear 75 form a first pair of transmission gears 84.

A seventh gear 74 is provided on the second rotation shaft 54 such that it cannot rotate with respect to the second rotation shaft 54. The seventh gear 74 rotates together with the second rotation shaft 54. In addition, an eighth gear 78 is provided on the third rotation shaft 64 such that it cannot rotate with respect to the third rotation shaft 64. The third rotation shaft 64 rotates together with the eighth gear 78. The seventh gear 74 and the eighth gear 78 mesh with each other. The seventh gear 74 and the eighth gear 78 form a second pair of transmission gears 85.

The eighth gear 78 is a one-way gear. More specifically, the eighth gear 78 transmits the rotation of the second rotation shaft 54 to the third rotation shaft 64. On the other hand, the eighth gear 78 does not transmit the rotation of the third rotation shaft 64 to the second rotation shaft 54. That is, the eighth gear 78 also serves as a one-way rotation transmission mechanism 93.

Note that it is not essential in the invention for the eighth gear 78 to be a one-way gear. For example, a structure may be adopted in which the eighth gear 78 is a normal gear, and the seventh gear 74 is a one-way gear. In other words, the seventh gear 74 may also serve as a one-way rotation transmission mechanism. More specifically, a structure may be adopted in which the seventh gear 74 transmits the rotation of the second rotation shaft 54 to the eighth gear 78, but it does not transmit the rotation of the eighth gear 78 to the second rotation shaft 54.

### - A group of clutches 82 on the downstream side -

The second rotation shaft 54 is provided with a group of clutches 82 on the downstream side. The group of clutches 82 on the downstream side is located to the rear of the group of clutches 81 on the upstream side. As shown in FIG. 2, the group of clutches 82 on the downstream side and the group of clutches 81 on the upstream side are disposed at locations where they at least partially overlap in the axial direction of the input shaft 52. In other words, the group of clutches 82 on the downstream side and the group of clutches 81 on the upstream side are disposed at locations where they at least partially overlap in the vehicle width direction. In more detail, the group of clutches 82 on the downstream side and the group of clutches 81 on the upstream side are disposed at locations where they substantially overlap in the vehicle width direction.

The group of clutches 82 on the downstream side includes a third clutch 70 and a fourth clutch 66. The fourth clutch 66 is disposed on the right side of the third clutch 70. Therefore, the direction in which the first clutch 55 is located with respect to the second clutch 59 is the same as the direction in which the fourth clutch 66 is located with respect to the third clutch 70. As shown in FIG. 2, the first clutch 55 and the fourth clutch 66 are disposed so that they at least partially overlap in the vehicle width direction. In other words, the first clutch 55 and the fourth clutch 66 are disposed so that they at least partially overlap in the axial direction of the input shaft 52. Also, the second clutch 59 and the third clutch 70 are disposed so that they at least partially overlap in the vehicle width direction. In other words, the second clutch 59 and the third clutch 70 are disposed so that they at least partially overlap in the axial direction of the input shaft 52. Specifically, the first clutch 55 and the fourth clutch 66 are disposed so that they substantially overlap in the vehicle width direction. Also, the second clutch 59 and the third clutch 70 are disposed so that they substantially overlap in the vehicle width direction.

In this embodiment, the third clutch 70 and the fourth clutch 66 are hydraulic clutches. More specifically, in the first embodiment, the third clutch 70 and the fourth clutch 66 are disc type hydraulic clutches. However, the invention is not limited to this structure. The fourth clutch 66 and the third clutch 70 may be clutches other than hydraulic clutches. For example, the fourth clutch 66 and the third clutch 70 may be centrifugal clutches. However, it is preferable that the fourth clutch 66 and the third clutch 70 are hydraulic clutches.

As described above, in the invention, the first clutch 55 is a centrifugal clutch, and at least one of the second clutch 59, the third clutch 70 and the fourth clutch 66 may be a hydraulic clutch. As long as this condition is met, the second clutch 59, the third clutch 70 and the fourth clutch 66 may be drum type or disc type centrifugal clutches, or may be drum type or disc type hydraulic clutches. However, it is desirable for two or more of the second clutch 59, the third clutch 70 and the fourth clutch 66 to be hydraulic clutches. In particular, it is desirable for the second clutch 59 to be a centrifugal clutch and for the third clutch 70 and the fourth clutch 66 to be hydraulic clutches. Then, it is desirable for the third clutch 70 and the fourth clutch 66 that are hydraulic clutches to be disposed on the same rotation shaft and for the first clutch 55 and the second clutch 59 that are centrifugal clutches to be disposed on a separate rotation shaft.

In the invention, the term "centrifugal clutch" refers to a clutch that has an input side clutch member and an output side clutch member, where, when the rotation speed of the input side clutch member is equal to or higher than a predetermined rotation speed, the input side clutch member and the output side clutch member are engaged and joined, and when the rotation speed of the input side clutch member is lower than the predetermined rotation speed, the input side clutch member and the output side clutch member separate and are disengaged.

The rotation speed of the second rotation shaft 54 when the third clutch 70 is engaged, and the rotation speed of the second rotation shaft 54 when the fourth clutch 66 is engaged are different from each other. In other words, the rotation speed of the inner 71 when the third clutch 70 is engaged, and the rotation speed of the inner 67 when the fourth clutch 66 is engaged are different from each other. More specifically, the rotation speed of the second rotation shaft 54 when the third clutch 70 is engaged is lower than the rotation speed of the second rotation shaft 54 when the fourth clutch 66 is engaged.

The third clutch 70 is provided with the inner 71 as an input side clutch member, and an outer 72 as an output side clutch member. The inner 71 is provided such that it cannot rotate with respect to the second rotation shaft 54. Accordingly, the inner 71 rotates together with the rotation of the second rotation shaft 54. On the other hand, the outer 72 can rotate with respect to the second rotation shaft 54. In a state where the third clutch 70 is disengaged, when the second rotation shaft 54 rotates, the inner 71 rotates together with the second rotation shaft 54, but the outer 72 does not rotate together with the second rotation shaft 54. In a state where the third clutch 70 is engaged, both the inner 71 and the outer 72 rotate together with the second rotation shaft 54.

A fifth gear 73 is attached to the outer 72 that is an output side clutch member of the third clutch 70. The fifth gear 73 rotates together with the outer 72. In addition, a sixth gear 77 is provided on the third rotation shaft 64 such that it cannot rotate with respect to the third rotation shaft 64. The sixth gear 77 rotates together with the third rotation shaft 64. The fifth gear 73 and the sixth gear 77 mesh with each other. Therefore, the rotation of the outer 72 is transmitted to the third rotation shaft 64 via the fifth gear 73 and the sixth gear 77.

The fifth gear 73 and the sixth gear 77 form a third pair of shift gears 91. The third pair of shift gears 91 has a gear ratio that is different from the ratios of the first pair of shift gears 86, the fourth pair of shift gears 83, and a second pair of shift gears 90.

The third pair of shift gears 91 is located with respect to the third clutch 70 on the same side on which the fourth pair of shift gears 83 is located with respect to the second clutch 59. More specifically, the third pair of shift gears 91 is located on the left side of the third clutch 70. In a similar manner, the fourth pair of shift gears 83 is located on the left side of the second clutch 59.

Further, the third pair of shift gears 91 and the fourth pair of shift gears 83 are disposed so that they at least partially overlap with each other in the vehicle width direction. In other words, the third pair of shift gears 91 and the fourth pair of shift gears 83 are disposed so that they at least partially overlap with each other in the axial direction of the input shaft 52. More specifically, the third pair of shift gears 91 and the fourth pair of shift gears 83 are disposed so that they substantially overlap in the vehicle width direction.

The fourth clutch 66 is provided with the inner 67 as an input side clutch member and an outer 68 as an output side clutch member. The inner 67 is provided such that it cannot rotate with respect to the second rotation shaft 54. Accordingly, the inner 67 rotates together with the rotation of the second rotation shaft 54. On the other hand, the outer 68 can rotate with respect to the second rotation shaft 54. In a state where the fourth clutch 66 is disengaged, when the second rotation shaft 54 rotates, the inner 67 rotates together with the second rotation shaft 54, but the outer 68 does not rotate together with the second rotation shaft 54. In a state where the fourth clutch 66 is engaged, both the inner 67 and the outer 68 rotate together with the second rotation shaft 54.

A third gear 69 is attached to the outer 68 that is an output side clutch member of the fourth clutch 66. The third gear 69 rotates together with the outer 68. In addition, a fourth gear 76 is provided on the third rotation shaft 64 such that it cannot rotate with respect to the third rotation shaft 64. The fourth gear 76 rotates together with the third rotation shaft 64. The third gear 69 and the fourth gear 76 mesh with each other. Therefore, the rotation of the outer 68 is transmitted to the third rotation shaft 64 via the third gear 69 and the fourth gear 76.

The fourth gear 76 and the third gear 69 form the second pair of shift gears 90. The second pair of shift gears 90 has a gear ratio that is different from the ratios of the first pair of shift gears 86 and the fourth pair of shift gears 83.

Between the third pair of shift gears 91 and the second pair of shift gears 90, the third clutch 70 and the fourth clutch 66 are located. In other words, the third clutch 70 and the fourth clutch 66 are disposed between the third pair of shift gears 91 and the second pair of shift gears 90.

The second pair of shift gears 90 is located with respect to the fourth clutch 66 on the same side on which the first pair of shift gears 86 is located with respect to the first clutch 55. More specifically, the second pair of shift gears 90 is located on the right side of the fourth clutch 66. In a similar manner, the first pair of shift gears 86 is located on the right side of the first clutch 55.

Further, the second pair of shift gears 90 and the first pair of shift gears 86 are disposed so that they at least partially overlap with each other in the vehicle width direction. In other words, the second pair of shift gears 90 and the first pair of shift gears 86 are disposed so that they at least partially overlap with each other in the axial direction of the input shaft 52. More specifically, the second pair of shift gears 90 and the first pair of shift gears 86 are disposed so that they substantially overlap in the vehicle width direction.

A thirteenth gear 79 is provided on the third rotation shaft 64 such that it cannot rotate with respect to the third rotation shaft 64. The thirteenth gear 79 is disposed on the left side of the fourth gear 76 and the sixth gear 77, in the vehicle width direction. The thirteenth gear 79 rotates together with the third rotation shaft 64. Furthermore, the fourteenth gear 80 is provided on the output shaft 33 such that it cannot rotate with respect to the output shaft 33. In other words, the fourteenth gear 80 rotates together with the output shaft 33. The fourteenth gear 80 and the thirteenth gear 79 form a third pair of transmission gears 98. The third pair of transmission gears 98 transmits the rotation of the third rotation shaft 64 to the output shaft 33.

### - Detailed structure of the group of clutches 82 on the downstream side -

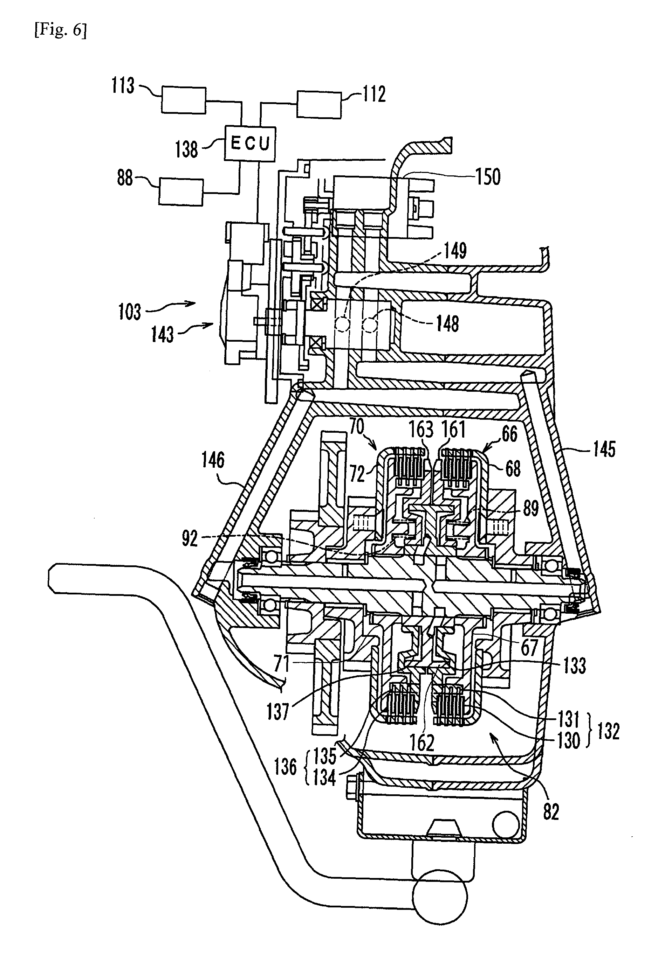

Next, with reference to FIG. 6 to FIG. 8, the group of clutches 82 on the downstream side will be described in further detail.

The third clutch 70 is provided with a plate group 136. The plate group 136 includes a plurality of friction plates 134 and a plurality of clutch plates 135. The plurality of friction plates 134 and the plurality of clutch plates 135 are alternately laminated in the vehicle width direction. The friction plates 134 are unrotatable with respect to the outer 72. On the other hand, the clutch plates 135 are unrotatable with respect to the inner 71.

The inner 71 is rotatable with respect to the outer 72. A pressure plate 163 is disposed on the side of the inner 71 opposite to the outer 72 in the vehicle width direction. The pressure plate 163 is urged rightward in the vehicle width direction by a compression coil spring 92. That is, the pressure plate 163 is urged to a boss portion 162 by the compression coil spring 92.

A working chamber 137 is defined between the boss portion 162 and the pressure plate 163. The working chamber 137 is filled with oil. When a hydraulic pressure within the working chamber 137 increases, the pressure plate 163 is displaced in a direction away from the boss portion 162. Accordingly, a distance between the pressure plate 163 and the inner 71 becomes short. Accordingly, the plate group 136 mutually becomes in a press-contact state. As a result, the inner 71 and the outer 72 rotate together, and the third clutch 70 becomes in an engagement state.

On the other hand, when the pressure within the working chamber 137 decreases, the pressure plate 163 is displaced to the boss portion 162 by the compression coil spring 92. Accordingly, the press-contact state of the plate group 136 is released. As a result, the inner 71 and the outer 72 are relatively rotatable with respect to each other, and the third clutch 70 is disengaged.

Although not shown in the figures, a tiny leak hole that communicates with the working chamber 137 is formed in the third clutch 70. Further, a gap between the inner 71 and the outer 72 is not sealed. Thus, the oil in the working chamber 137 can be rapidly discharged when the clutch 70 is disengaged. Therefore, according to the embodiment, the response of the clutch 70 can be improved. In addition, according to the embodiment, the oil scattering from the leak hole or the gap between the inner 71 and the outer 72 can be used to lubricate other sliding sections effectively.

The fourth clutch 66 is provided with a plate group 132. The plate group 132 includes a plurality of friction plates 130 and a plurality of clutch plates 131. The plurality of friction plates 130 and the plurality of clutch plates 131 are alternately laminated in the vehicle width direction. The friction plates 130 are unrotatable with respect to the outer 68. Meanwhile, the clutch plates 131 are unrotatable with respect to the inner 67.

The inner 67 is rotatable with respect to the outer 68 and is displaceable in the vehicle width direction. A pressure plate 161 is disposed on the side of the inner 67 opposite to the outer 68 in the vehicle width direction. The pressure plate 161 is urged leftward in the vehicle width direction by a compression coil spring 89. That is, the pressure plate 161 is urged to the boss portion 162 by the compression coil spring 89.

A working chamber 133 is defined between the boss portion 162 and the pressure plate 161. The working chamber 133 is filled with oil. When the hydraulic pressure within the working chamber 133 increases, the pressure plate 161 is displaced in a direction away from the boss portion 162. Accordingly, a distance between the pressure plate 161 and the inner 67 becomes short. Accordingly, the plate group 132 mutually becomes in a pressure-contact state. As a result, the inner 67 and the outer 68 rotate together, and the fourth clutch 66 becomes in an engagement state.

On the other hand, when the pressure within the working chamber 133 decreases, the pressure plate 161 is displaced to the boss portion 162 by the compression coil spring 89. Accordingly, the press-contact state of the plate group 132 is released. As a result, the inner 67 and the outer 68 are relatively rotatable with respect to each other, and the fourth clutch 66 is disengaged.

Although not shown in the figures, a tiny leak hole that communicates with the working chamber 133 is formed in the fourth clutch 66. Further, a gap between the inner 67 and the outer 68 is not sealed. Thus, the oil in the working chamber 133 can be rapidly discharged when the clutch 66 is disengaged. Therefore, according to the embodiment, the response of the clutch 66 can be improved. In addition, according to the embodiment, the oil scattering from the leak hole or the gap between the inner 67 and the outer 68 can be used to lubricate other sliding sections effectively.

### - Oil path 139 -

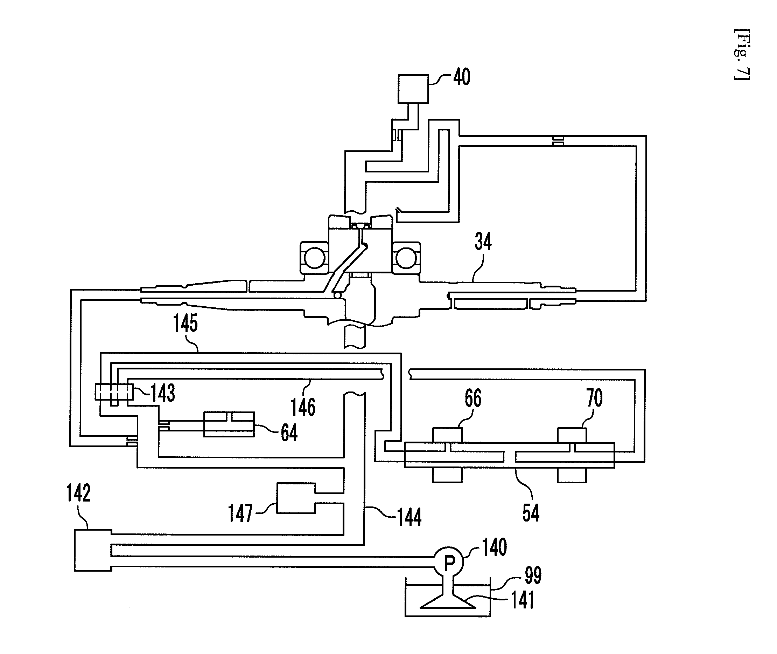

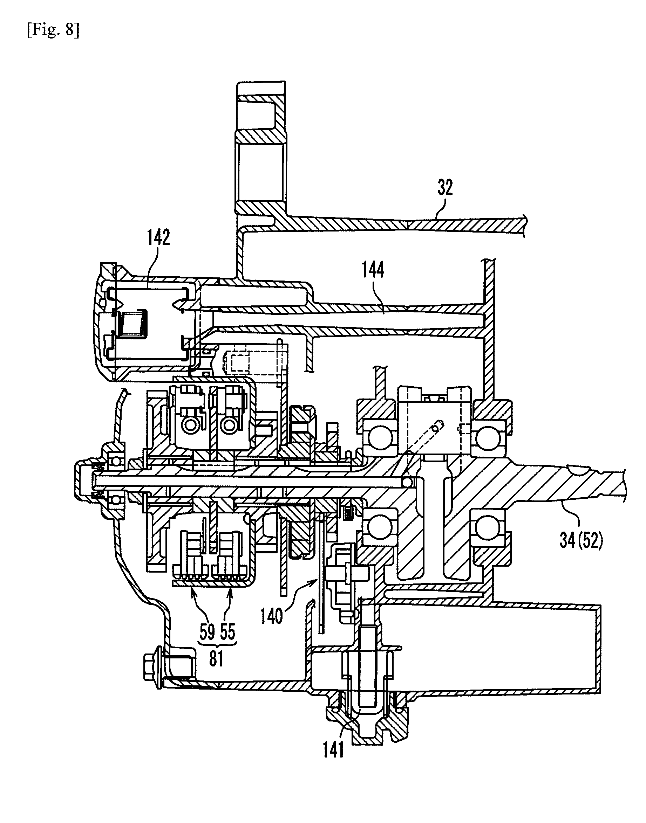

As shown in FIG. 7, an oil pump 140 applies and regulates the pressure in the working chamber 133 of the fourth clutch 66 and the pressure in the working chamber 137 of the third clutch 70. As shown in FIG. 7, an oil reservoir 99 is formed at the bottom of the crank chamber 35. A strainer 141, which is also shown in FIG. 8, is immersed in the oil reservoir 99. The strainer 141 is connected to the oil pump 140. When the oil pump 140 is driven, the oil accumulated in the oil reservoir 99 is pumped up via the strainer 141.

A relief valve 147 is provided in the middle of a first oil path 144. The pumped oil is purified by an oil cleaner 142, and is regulated to a predetermined pressure by the relief valve 147. After that, a part of the purified oil is supplied to the crank shaft 34 and to a sliding section in the cylinder head 40. Further, a part of the purified oil is also supplied to the working chamber 133 of the fourth clutch 66 and the working chamber 137 of the third clutch 70. More specifically, a second oil path 145 and a third oil path 146 are connected to the first oil path 144 that extends from the oil cleaner 142. The second oil path 145 extends from a valve 143, and passes on the crank case 32 side. Then, from the right end of the second rotation shaft 54, it extends through the inside of the second rotation shaft 54. Then, the second oil path 145 reaches the working chamber 133. Accordingly, the oil is supplied to the working chamber 133 via the second oil path 145, and the pressure in the working chamber 133 is regulated. On the other hand, the third oil path 146 extends from the valve 143 and passes on the transmission cover 50 side. Then, from the left end of the second rotation shaft 54, it extends through the inside of the second rotation shaft 54. Then, the third oil path 146 reaches the working chamber 137. Accordingly, the oil is supplied to the working chamber 137 via the third oil path 146.

The valve 143 is provided at the connecting section of the first oil path 144, the second oil path 145, and the third oil path 146. The valve 143 opens and closes between the first oil path 144 and the third oil path 146, and between the first oil path 144 and the second oil path 145.

As shown in FIG. 6, a motor 150 that drives the valve 143 is attached to the valve 143. The motor 150 drives the valve 143, whereby the third clutch 70 and the fourth clutch 66 are engaged/disengaged. That is, in this embodiment, the oil pump 140, the valve 143, and the motor 150 form an actuator 103 that applies hydraulic pressure to the third clutch 70 and the fourth clutch 66 that are hydraulic clutches. The actuator 103 is controlled by an ECU 138 shown in FIG. 6, and used to turn the third clutch 70 and the fourth clutch 66 ON/OFF. More specifically, the actuator 103 applies hydraulic pressure to the working chamber 133 and the working chamber 137 as necessary, thus engaging/disengaging the third clutch 70 and the fourth clutch 66.

To be more specific, as shown in FIG. 6, a throttle opening degree sensor 112 and the vehicle speed sensor 88 are connected to the ECU 138. The ECU 138 serving as a control portion controls the actuator 103 based on at least one of the throttle opening degree detected by the throttle opening degree sensor 112 and the vehicle speed detected by the vehicle speed sensor 88. By controlling the actuator 103 in this way, the ECU 138 controls the timing at which the third clutch 70 and the fourth clutch 66 are engaged. In this embodiment, the ECU 138 serving as the control portion controls the actuator 103 based on both the throttle opening degree detected by the throttle opening degree sensor 112 and the vehicle speed detected by the vehicle speed sensor 88. More specifically, the ECU 138 controls the actuator 103 based on information that is obtained by applying the throttle opening degree output from the throttle opening degree sensor 112 and the vehicle speed output from the vehicle speed sensor 88 to a V-N diagram read from a memory 113.

Specifically, the valve 143 is formed in a generally cylindrical shape. An internal path 148 for connecting the first oil path 144 and the second oil path 145, and an internal path 149 for connecting the first oil path 144 and the third oil path 146 are formed in the valve 143. The internal paths 148 and 149 are designed to select one of the following positions when the valve 143 is rotated by the motor 150: a position where the first oil path 144 and the second oil path 145 are connected, while the first oil path 144 and the third oil path 146 are disconnected; a position where the first oil path 144 and the third oil path 146 are connected, while the first oil path 144 and the second oil path 145 are disconnected; and a position where the first oil path 144 and the third oil path 146 are disconnected, and the first oil path 144 and the second oil path 145 are also disconnected. Thus, one of the following states is selected: a state where both the fourth clutch 66 and the third clutch 70 are disengaged; a state where the fourth clutch 66 is engaged, while the third clutch 70 is disengaged; and a state where the fourth clutch 66 is disengaged, while the third clutch 70 is engaged.

### - Operation of the transmission 31 -

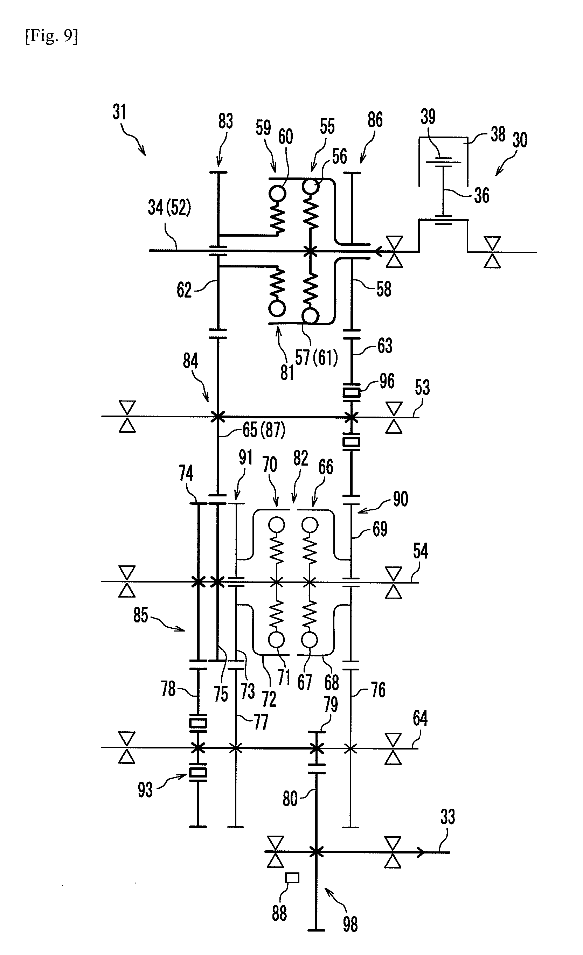

Next, the operation of the transmission 31 will be described in detail with reference to FIG. 9 to FIG. 12.

### - First speed when starting from standstill -

First, when the engine 30 is started, the crank shaft 34 (i.e., the input shaft 52) starts to rotate. The inner 56 of the first clutch 55 rotates together with the input shaft 52. Therefore, when the rotation speed of the input shaft 52 becomes equal to or higher than a predetermined rotation speed (i.e., the first rotation speed), and a centrifugal force equal to or larger than a predetermined magnitude is applied to the inner 56, the first clutch 55 is engaged as shown in FIG. 9. When the first clutch 55 is engaged, the first pair of shift gears 86 rotates together with the outer 57 of the first clutch 55. Thus, the rotation of the input shaft 52 is transmitted to the first rotation shaft 53.

The ninth gear 87 rotates together with the first rotation shaft 53. Accordingly, the first pair of transmission gears 84 also rotates along with the rotation of the first rotation shaft 53. Thus, the rotation of the first rotation shaft 53 is transmitted to the second rotation shaft 54 via the first pair of transmission gears 84.

The seventh gear 74 rotates together with the second rotation shaft 54. Accordingly, the second pair of transmission gears 85 also rotates along with the rotation of the second rotation shaft 54. Thus, the rotation of the second rotation shaft 54 is transmitted to the third rotation shaft 64 via the second pair of transmission gears 85.

The thirteenth gear 79 rotates together with the third rotation shaft 64. Accordingly, the third pair of transmission gears 98 also rotates along with the rotation of the third rotation shaft 64. Thus, the rotation of the third rotation shaft 64 is transmitted to the output shaft 33 via the third pair of transmission gears 98.

In this manner, when the scooter type vehicle 1 is started from standstill, that is, in the first speed, rotation is transmitted from the input shaft 52 to the output shaft 33 via the first clutch 55, the first pair of shift gears 86, the first pair of transmission gears 84, the second pair of transmission gears 85, and the third pair of transmission gears 98, as shown in FIG. 9.

### - Second speed -

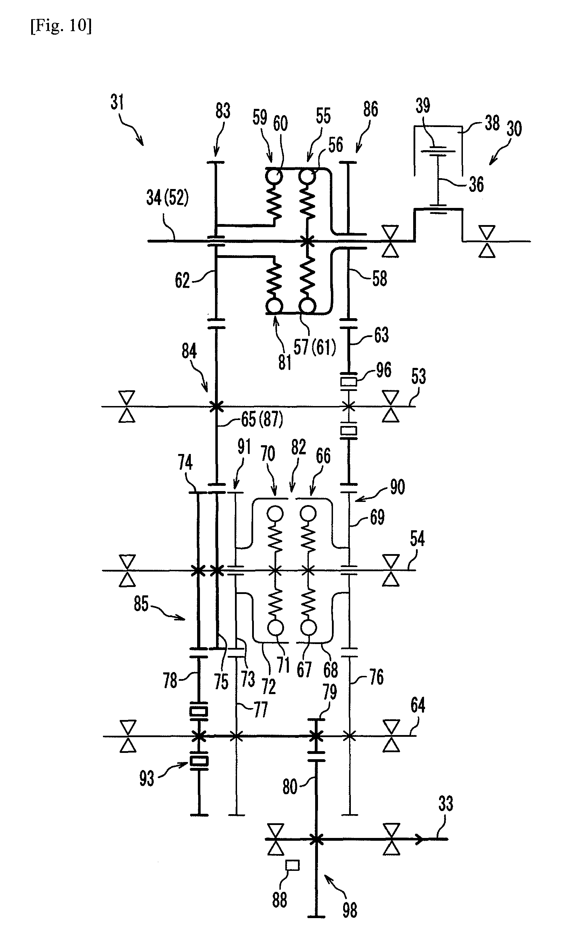

In the first speed, the twelfth gear 65 common with the ninth gear 87 rotates together with the first rotation shaft 53. Therefore, the eleventh gear 62 meshing with the twelfth gear 65 and the inner 60 of the second clutch 59 also rotate together. Accordingly, as the rotation speed of the input shaft 52 increases, the rotation speed of the inner 60 of the second clutch 59 also increases. When the rotation speed of the input shaft 52 becomes equal to or higher than the second rotation speed that is higher than the first rotation speed, the rotation speed of the inner 60 also increases accordingly, and the second clutch 59 is engaged as shown in FIG. 10.

Note that, in this embodiment, the gear ratio of the fourth pair of shift gears 83 is smaller than the gear ratio of the first pair of shift gears 86. As a result, the rotation speed of the twelfth gear 65 is higher than the rotation speed of the second gear 63. Accordingly, rotation is transmitted from the input shaft 52 to the first rotation shaft 53 via the fourth pair of shift gears 83. On the other hand, the rotation of the first rotation shaft 53 is not transmitted to the input shaft 52 by the one-way rotation transmission mechanism 96.

The rotation force is transmitted from the first rotation shaft 53 to the output shaft 33, in the same manner as in the first speed, via the first pair of transmission gears 84, the second pair of transmission gears 85, and the third pair of transmission gears 98.

In this manner, in the second speed, rotation is transmitted from the input shaft 52 to the output shaft 33 via the second clutch 59, the fourth pair of shift gears 83, the first pair of transmission gears 84, the second pair of transmission gears 85, and the third pair of transmission gears 98, as shown in FIG. 10.

### - Third speed -

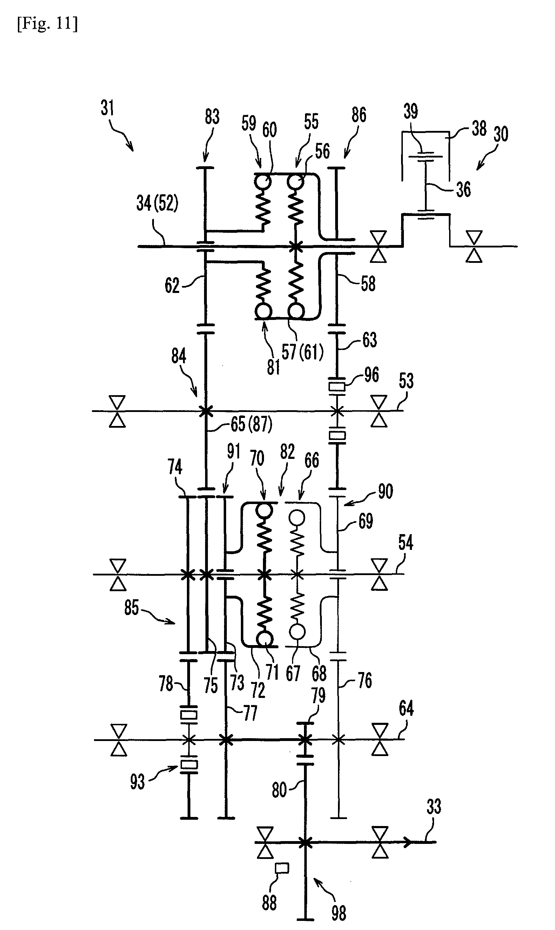

In the second speed, when the rotation speed of the crank shaft 34 (i.e., the input shaft 52) becomes higher than the second rotation speed, and the vehicle speed becomes equal to or higher than a predetermined vehicle speed, the valve 143 is driven and the third clutch 70 is engaged, as shown in FIG. 11. As a result, the third pair of shift gears 91 starts to rotate. Note that the gear ratio of the third pair of shift gears 91 is smaller than the gear ratio of the second pair of transmission gears 85. Therefore, the rotation speed of the sixth gear 77 of the third pair of shift gears 91 becomes higher than the rotation speed of the eighth gear 78 of the fourth pair of transmission gears 85. Thus, the rotation of the second rotation shaft 54 is transmitted to the third rotation shaft 64 via the third pair of shift gears 91. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed and the second speed.

In this manner, in the third speed, rotation is transmitted from the input shaft 52 to the output shaft 33 via the second clutch 59, the fourth pair of shift gears 83, the first pair of transmission gears 84, the third clutch 70, the third pair of shift gears 91, and the third pair of transmission gears 98, as shown in FIG. 11.

### - Fourth speed -

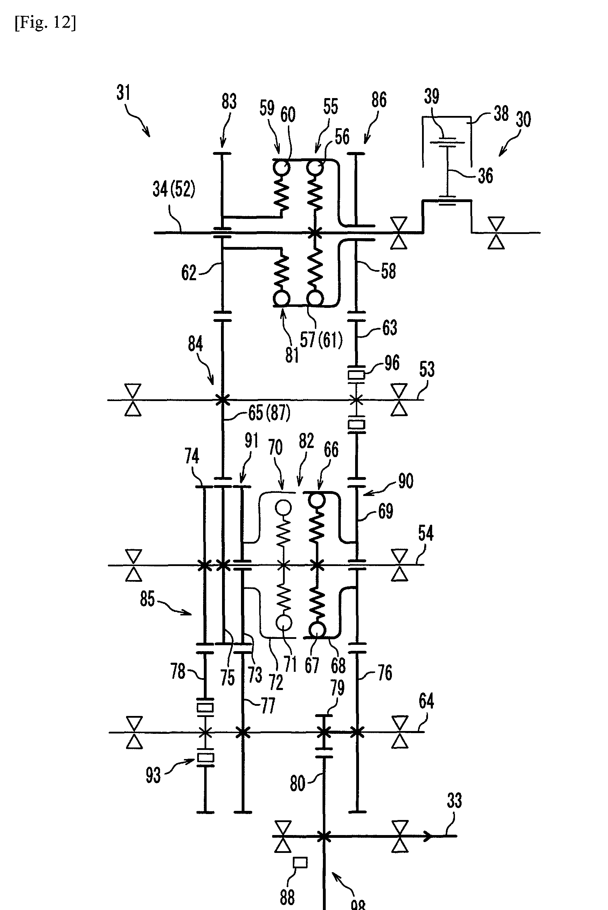

In the third speed, when the rotation speed of the crank shaft 34 (i.e., the input shaft 52) further increases and the vehicle speed further increases as well, the valve 143 is driven and the fourth clutch 66 is engaged as shown in FIG. 12. On the other hand, the third clutch 70 is disengaged. As a result, the second pair of shift gears 90 starts to rotate. Note that the gear ratio of the second pair of shift gears 90 is also smaller than the gear ratio of the second pair of transmission gears 85. Therefore, the rotation speed of the fourth gear 76 of the second pair of shift gears 90 becomes higher than the rotation speed of the eighth gear 78 of the second pair of transmission gears 85. Thus, the rotation of the second rotation shaft 54 is transmitted to the third rotation shaft 64 via the second pair of shift gears 90. On the other hand, the rotation of the third rotation shaft 64 is not transmitted to the second rotation shaft 54 by the one-way rotation transmission mechanism 93.

The rotation of the third rotation shaft 64 is transmitted to the output shaft 33 via the third pair of transmission gears 98, in the same manner as in the first speed to the third speed.

Likewise, in the fourth speed, as shown in FIG. 12, a rotation is transmitted from the input shaft 52 to the output shaft 33 via the second clutch 59, the fourth pair of shift gears 83, the first pair of transmission gears 84, the fourth clutch 66, the second pair of shift gears 90, and the third pair of transmission gears 98.

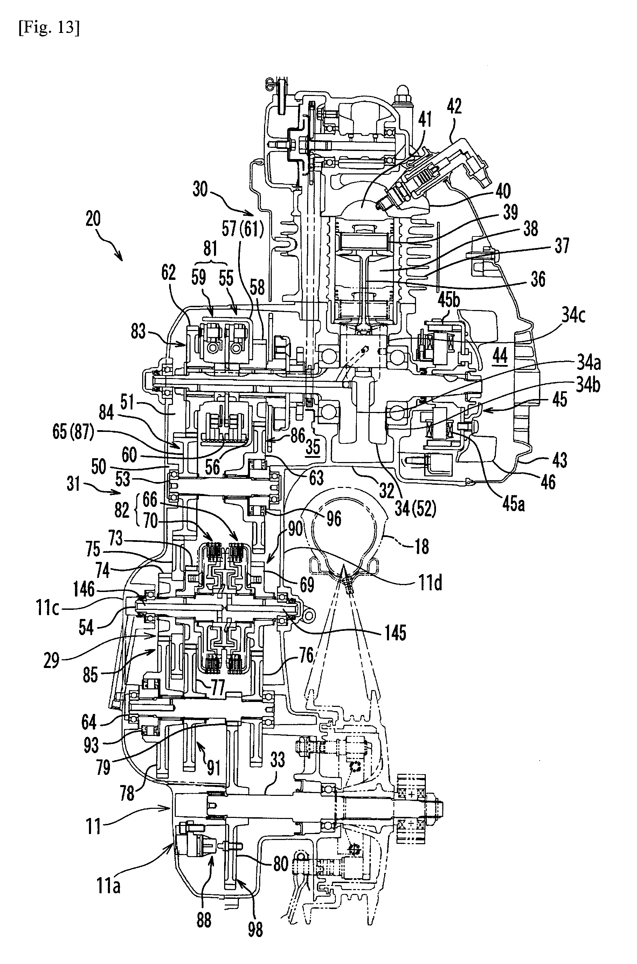

In this embodiment, as shown in FIG. 13, the crank shaft 34 includes a pair of crank webs 34a and 34b. The connecting rod 36 is connected to the pair of crank webs 34a and 34b via a crank pin 34c.

As shown in FIGS. 1 and 13, the rear wheel 18 is disposed in rear of the crank shaft 34 and on the inside of the transmission 31 in the vehicle width direction. As shown in FIG. 13, the rear wheel 18 is disposed in rear of the crank webs 34a and 34b and the crank pin 34c. The left end of the rear wheel 18 is located on the outside of the left end of the crank pin 34c in the vehicle width direction. That is, at least a part of the rear wheel 18 is located on the outside of the crank pin 34c in the vehicle width direction.

As described above, the engine unit 20 includes the crank case 32, the transmission cover 50, and the generator cover 43. The crank case 32, the transmission cover 50, and the generator cover 43 form a casing 11 for accommodating the engine 30 and the transmission 31. A part of the transmission cover 50 and the crank case 32 forms a transmission accommodation part 11a. The transmission housing 51 is formed by the transmission accommodation part 11a.

In the transmission accommodation part 11a, the transmission cover 50 located on the outside of the transmission 31 in the vehicle width direction forms an outer wall 11c of the transmission accommodation part 11a.

In the crank case 32, a part corresponding to the inside of the transmission 31 in the vehicle width direction and located on the outside of the rear wheel 18 in the vehicle width direction forms an inner wall 11d of the transmission accommodation part 11a. The first, second, and third rotation shafts 53, 54, and 64 are located between the inner wall 11d and the outer wall 11c in the vehicle width direction. Additionally, at least a part of the second gear 63 as the second shift gear is located on the outside of the inner wall 11d in the vehicle width direction. Specifically, in this embodiment, a whole part of the second gear 63 is located on the outside of the inner wall 11d in the vehicle width direction. Meanwhile, the crank shaft 34 is located in front of the inner wall 11d.

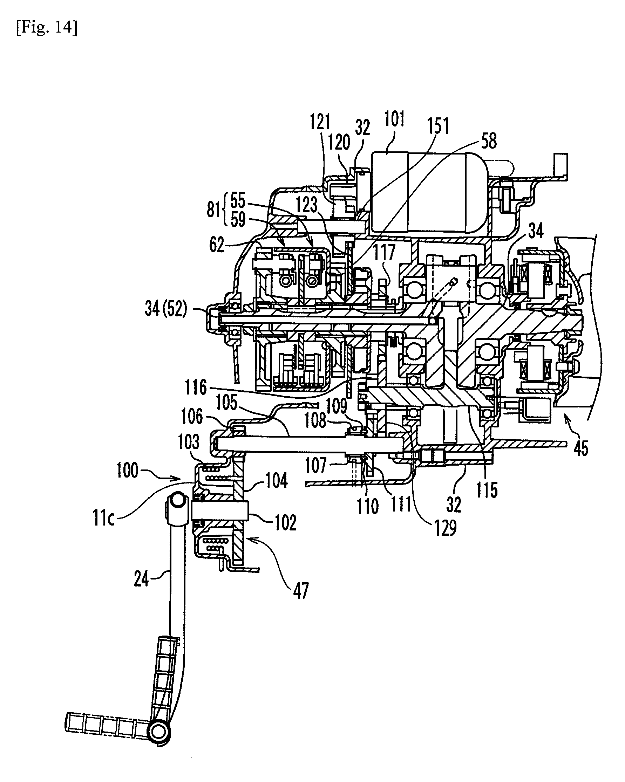

As shown in FIG. 14, the above-described kick shaft 102 is rotatably supported to the outer wall 11c. As shown in FIGS. 3 and 14, the balancer shaft 115 and the shaft 105 as the intermediate shaft are provided between the kick shaft 102 and the crank shaft 34. The gear 104 as the first kick gear provided in the kick shaft 102 is located on the outside of the first pair of shift gears 86 as the first pair of gears and the fourth pair of shift gears 83 as the second pair of gears in the vehicle width direction. The gear 104 meshes with the gear 106 as the second kick gear provided in the shaft 105. As shown in FIG. 14, the gear 106 and the gear 104 form a pair of kick-transmission gears 47.

The shaft 105 as the intermediate shaft is provided with a gear 111 as a third kick gear. The gear 111 is located on the inside of the first gear 58 in the vehicle width direction. The gear 111 indirectly meshes with a gear 117 as a sixth kick gear provided in the crank shaft 34. The gear 117 is located on the inside of the first gear 58 as the first shift gear in the vehicle width direction. That is, the gear 111 as the third kick gear indirectly meshes with a portion on the inside of the first gear 58 of the crank shaft 34 in the vehicle width direction.

More specifically, the balancer shaft 115 as an additional intermediate shaft is provided between the shaft 105 and the crank shaft 34. The balancer shaft 115 is provided with the gear 116 as the fourth kick gear. The gear 116 rotates together with the balancer shaft 115. The gear 116 as the fourth kick gear meshes with the gear 111 as the third kick gear. Additionally, the balancer shaft 115 as the additional intermediate shaft is provided with the gear 129 as a fifth kick gear. The gear 129 rotates together with the balancer shaft 115. The gear 129 meshes with the gear 117 as a sixth kick gear rotating together with the crank shaft 34.

Then, in this embodiment, a case will be described in which the balancer shaft 115 is used as one of the intermediate shaft provided between the kick shaft 102 and the crank shaft 34. Here, the intermediate shaft provided between the kick shaft 102 and the crank shaft 34 may be provided in addition to the balancer shaft 115.

As shown in FIGS. 3 and 14, a gear 120 as a starter gear meshes with a portion on the inside of the first gear 58 as the first shift gear of the crank shaft 34 in the vehicle width direction. Specifically, as shown in FIG. 14, the gear 120 as the starter gear meshes with the gear 121 provided in a shaft 151. The gear 121 is rotatably fixed to the shaft 151 unrotatably fixed to the crank case 32. The gear 121 meshes with the gear 123. The gear 123 is provided on the inside part of the first gear 58 of the crank shaft 34 in the vehicle width direction.

Then, as shown in FIG. 13, a power transmission mechanism 29 for transmitting the rotation of the first rotation shaft 53 to the output shaft 33 is formed by the first to third pair of transmission gears 84, 85, and 98, the downstream clutch group 82, and the second and third pair of shift gears 90 and 91.

Additionally, there are following correspondence relationships.
The first shift gear: the first gear 58
The second shift gear: the second gear 63
The third shift gear: the eleventh gear 62
The fourth shift gear: the twelfth gear 65
The first pair of gears: the first pair of shift gears 86
The second pair of gears: the fourth pair of shift gears 83
The first kick gear: the gear 104
The second kick gear: the gear 106
The third kick gear: the gear 111
The fourth kick gear: the gear 116
The fifth kick gear: the gear 129
The sixth kick gear: the gear 117
The starter gear: the gear 120

As described above, in this embodiment, a planetary gear having a complex configuration is not used. Accordingly, the transmission 31 further realizes a simplification of the configuration of the engine unit 20.

Additionally, since a comparatively large planetary gear is not disposed on the crank shaft 34, it is possible to realize downsizing of the engine unit 20 in an axial direction of the crank shaft 34.

Incidentally, in the engine unit, a decrease in weight corresponds to a general problem to be solved. Therefore, in order to realize a decrease in weight of the engine unit, the length of the kick shaft and the intermediate shaft disposed between the kick shaft and the crank shaft tends to be very short. Specifically, for example, since the power transmission of the kick shaft and the crank shaft is carried out on the outside of the first and second pairs of shift gears in the vehicle width direction, in general, the axial length of the kick shaft and the intermediate shaft is set to be short.

However, in this embodiment, the first gear 58 and the eleventh gear 62 disposed on the input shaft 52 are rotatable with respect to the crank shaft 34. For this reason, when the power transmission of the kick shaft and the crank shaft is carried out on the outside of the first and second pairs of shift gears in the vehicle width direction, it is necessary to additionally provide a kick starter gear on the outside of the eleventh gear in the vehicle width direction. Accordingly, since the additional gear is required, the size of the engine unit in the vehicle width direction tends to increase.

Then, the inner 56 of the first clutch 55 rotates together with the crank shaft 34. However, the inner 56 is located between the first gear 58 as the first shift gear and the eleventh gear 62 as the third shift gear in the vehicle width direction. For this reason, when the kick starter gear is provided on the inner of the first clutch, it is necessary to make long a distance between the first gear and the eleventh gear. Accordingly, even in this case, the size of the engine unit in the vehicle width direction tends to increase.

Here, in the vehicle in which the rear wheel 18 is located on the inside of the transmission 31 in the vehicle width direction like this embodiment, the inner wall 11d is comparatively disposed on the outside in the vehicle width direction in order to avoid the positional interference with the rear wheel 18. For this reason, it is necessary to dispose the first pair of shift gears 86 in the comparatively outside in the vehicle width direction. As a result, the distance between the crank pin 34c and the first gear 58 forming a part of the pair of the first shift gears 86 becomes comparatively longer.

In this embodiment, as shown in FIG. 14, there is provided the gear 117 indirectly meshing with the kick shaft 102 between the first gear 58 and the crank pin 34c. Accordingly, it is not necessary to additionally ensure a space for disposing the gear 117. Accordingly, it is possible to make small the size of the engine unit 20 in the vehicle width direction.

Then, the gap between the first gear 58 and the crank pin 34c tends to increase particularly in a single cylinder engine or a V twin engine. For this reason, the configuration of this embodiment is particularly effective in the engine unit having the single cylinder engine or the V twin engine.

Incidentally, from the viewpoint of a decrease in weight of the kick starter, it is desirable that the intermediate shaft is not disposed between the kick shaft and the crank shaft. However, in this case, it is necessary to allow the gear provided in the kick shaft to directly mesh with the gear provided in the crank shaft. For this reason, in order to ensure a large deceleration ratio between the kick shaft and the crank shaft, it is necessary to make large the diameter of the gear provided in the kick shaft. Accordingly, a problem arises in that the gear provided in the kick shaft interferes with other members in position, and thus the size of the engine unit tends to increase.

On the contrary, in this embodiment, the shaft 105 and the balancer shaft 115 are provided between the kick shaft 102 and the crank shaft 34. The plurality of gears 106, 111, 116, and 129 is provided between the gear 104 provided in the kick shaft 102 and the gear 117 provided in the crank shaft 34. For this reason, it is possible to make large the deceleration ratio between the kick shaft and the crank shaft without making large each diameter of the gears 117, 106, 111, 116, and 129. Accordingly, it is possible to realize a decrease in size of the engine unit 20.

Additionally, in this embodiment, the balancer shaft 115 is used as the intermediate shaft between the kick shaft 102 and the crank shaft 34. Accordingly, it is possible to more decrease the weight and the size of the engine unit 20 than a case in which the intermediate shaft is provided in addition to the balancer shaft 115.

In this embodiment, there is provided the starter 101 as well as the kick start 100. Then, the gear 120 of the starter 101 indirectly meshes with the gear 123 disposed in a dead space located on the inside of the first gear 58 in the vehicle width direction. With such a configuration, in the engine unit 20 having both the kick starter 100 and the starter 101, it is possible to realize a decrease in size in the vehicle width direction.

Additionally, in this embodiment, the third clutch 70 and the fourth clutch 66 are configured as a hydraulic clutch. For this reason, in the third clutch 70 and the fourth clutch 66, it is possible to comparatively promptly perform the intermittence of the clutch. In other words, in the intermittence of the clutch, the third clutch 70 or the fourth clutch 66 does not continuously slide for a comparatively long time. For this reason, the energy loss in the third clutch 70 and the fourth clutch 66 reduces comparatively. Accordingly, it is possible to improve the fuel efficiency of the scooter type vehicle 1.

From the viewpoint of the improvement of the fuel efficiency of the scooter type vehicle 1, it is desirable that the first clutch 55 and the second clutch 59 are configured as a hydraulic clutch as well as the third clutch 70 and the fourth clutch 66. However, in the hydraulic clutch, the intermittence is comparatively promptly carried out. For this reason, when the first clutch 55 is configured as the hydraulic clutch, the first clutch 55 is suddenly engaged at a start time. For this reason, it is difficult to perform a smooth start. Accordingly, it is not possible to obtain both of the smooth start and the improvement of the fuel efficiency.

On the contrary, in this embodiment, the first clutch 55 provided for the first pair of first speed shift gears 86 is the centrifugal clutch. The intermittence of the clutch of the centrifugal clutch is slower than that of the hydraulic clutch. For this reason, the smooth start of the vehicle is realized. That is, when the first clutch 55 for the first pair of first speed shift gears 86 is configured as the centrifugal clutch, and at least one of the clutches for the pair of higher-speed shift gears is configured as the hydraulic clutch, it is possible to improve the fuel efficiency and to perform the smooth start. Particularly, from the viewpoint of the smooth start and acceleration of the vehicle, it is desirable that the second clutch 59 is configured as the centrifugal clutch.

Additionally, even when the first clutch 55 and the second clutch 59 for the first and second speed are configured as the centrifugal clutches, the sliding does not continuously occur for a long time. Additionally, the frequency of the first speed and second speed driving is comparatively less. That is, the ratio of the first and second speed driving time in the entire driving time is comparatively small. Accordingly, even when the first clutch 55 or the second clutch 59 is configured as the centrifugal clutch, the fuel efficiency does not decrease.

Here, when the fuel efficiency is more important than the smooth acceleration, the other clutches may be configured as the hydraulic clutch in a state where only the first clutch 55 is configured as the centrifugal clutch.

That is, when two or more hydraulic clutches are used like this embodiment, it is possible to further improve the fuel efficiency.

In this embodiment, since the first clutch 55 is configured as the centrifugal clutch, the engagement state of the first clutch 55 is properly changed in accordance with an acceleration of the vehicle, a vehicle speed, and an operation amount of a throttle operator. For this reason, since the first clutch 55 is configured as the centrifugal clutch, it is possible to perform driving in accordance with the intension of the rider.

For example, when the throttle operator is operated to be large in order that the rider performs the start at the comparatively larger acceleration, the first clutch 55 is comparatively promptly engaged, thereby performing the start at a comparatively larger acceleration. On the other hand, when the throttle operator is operated to be small in order that the rider performs the smooth start at the comparatively smaller acceleration, the first clutch 55 is comparatively slowly engaged, thereby performing the smooth start at the comparatively smaller acceleration. Accordingly, it is possible to realize a high driving performance.

The timing of the intermittence of the centrifugal clutch is determined by the rpm of the engine, but in the hydraulic clutch, the timing of the intermittence is freely controlled by an ECU 138. That is, when two or more hydraulic clutches are used, it is possible to further improve a degree of freedom of the control of the transmission 31. Specifically, on the basis of the rider's operation or the driving state, it is possible to minutely control the intermittence of the clutch. Specifically, on the basis of at least one of the throttle opening degree and the vehicle speed, it is possible to carefully control the intermittence of the clutch.

For example, when the plurality of hydraulic clutches is used like this embodiment, it is desirable that the plurality of hydraulic clutches is disposed on the same rotation axis. Specifically, in case of this embodiment, it is desirable that the fourth clutch 66 and the third clutch 70 as the hydraulic clutches are disposed on the same second rotation shaft 54. With such an operation, it is possible to comparatively simplify an oil supply passage to the hydraulic clutch. Accordingly, it is possible to more simplify the configuration of the transmission 31.

Additionally, it is possible to reduce the number of rotation shafts having the oil supply passage therein. Accordingly, it is possible to easily manufacture the transmission 31 and to reduce the manufacture cost.

Particularly, from the viewpoint of the simple configuration of the transmission 31, like this embodiment, it is desirable that the rotation shaft attached with the centrifugal clutch and the rotation shaft attached with the hydraulic clutch are separately provided. Specifically, in case of this embodiment, it is desirable that the second clutch 59 and the first clutch 55 as the centrifugal clutches are provided in the input shaft 52, and the fourth clutch 66 and the third clutch 70 as the hydraulic clutches are provided in the second rotation shaft 54.

### «First modified example»

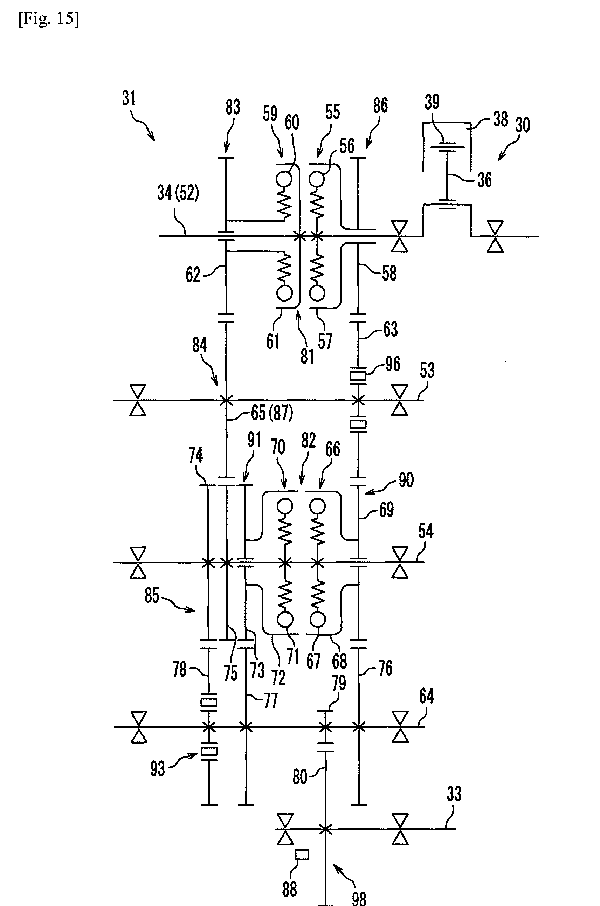

In the above-described embodiment, an example has been described in which the outer 57 of the first clutch 55 and the outer 61 of the second clutch 59 are formed by the same member. However, the invention is not limited to this configuration. For example, as shown in FIG. 15, the outer 57 of the first clutch 55 and the outer 61 of the second clutch 59 may be separately provided.

### «Second modified example»

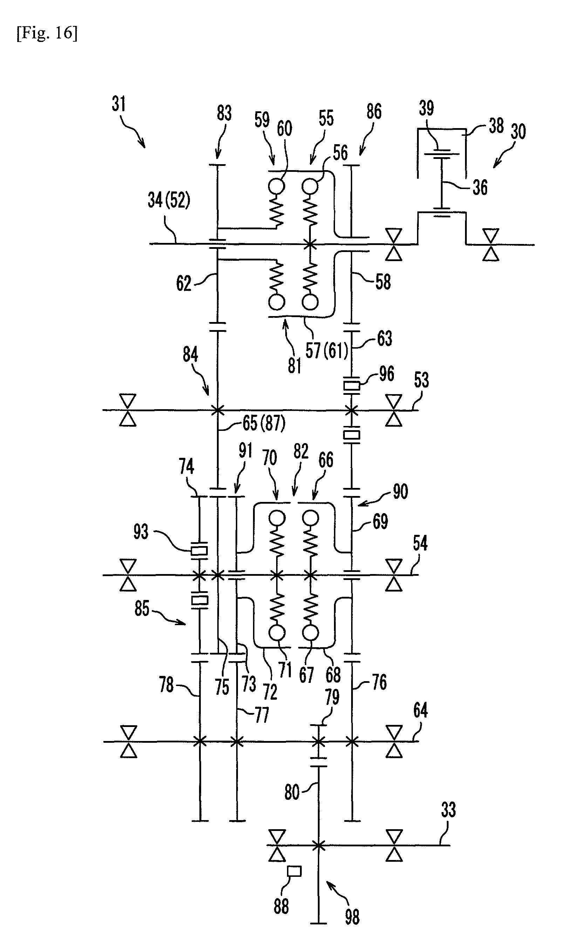

In the above-described embodiment, an example has been described in which the one-way rotation transmission mechanism 93 is provided for the eighth gear 78. However, the invention is not limited to this configuration. For example, as shown in FIG. 16, the one-way rotation transmission mechanism 93 may be disposed for the seventh gear 74.

### «Third modified example»

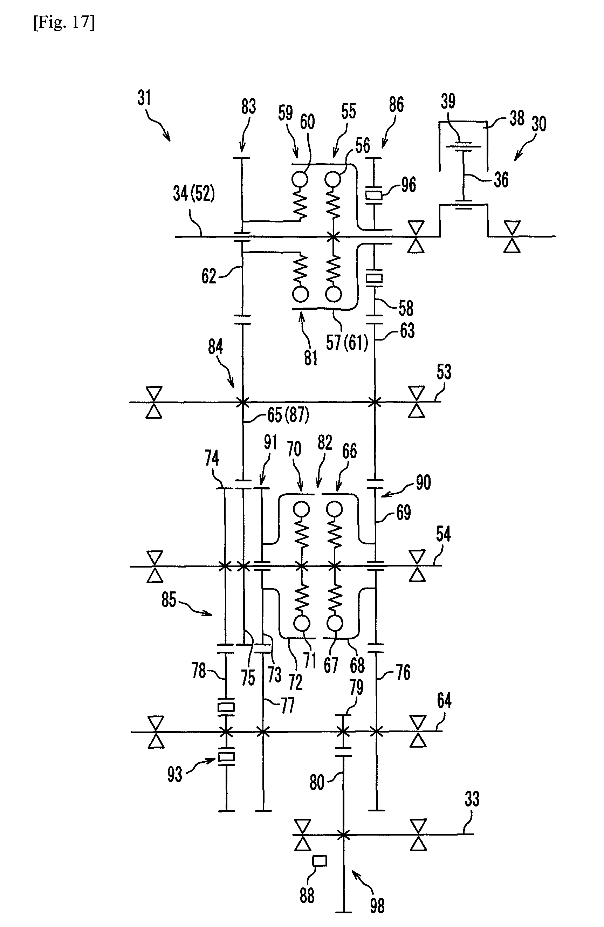

In the above-described embodiment, an example has been described in which the one-way rotation transmission mechanism 96 is disposed for the second gear 63. However, the invention is not limited to this configuration. For example, as shown in FIG. 17, the one-way rotation transmission mechanism 96 may be disposed for the first gear 58.

### «Fourth modified example»

In the above-described embodiment, an example has been described in which the four-speed transmission 31 is exemplified in the preferred embodiment of the invention. However, the invention is not limited thereto. For example, the transmission 31 may be a five speed or more. In this case, it may be supposed that two new rotation shafts are provided between the third rotation shaft 64 and the output shaft 33 and a new clutch and a pair of new shift gears are provided on the two rotation shafts.

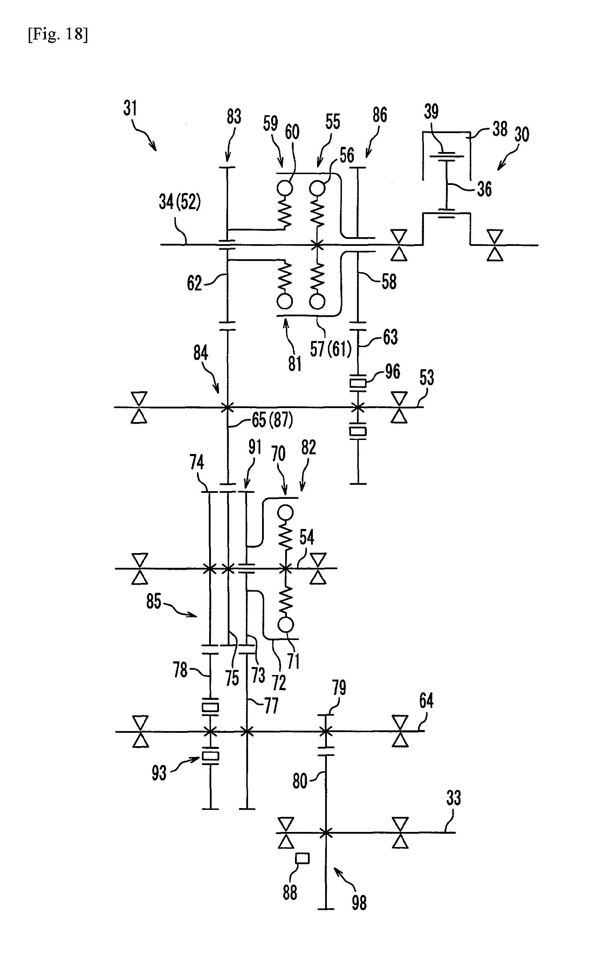

Additionally, for example, the transmission 31 may be configured as the three-speed transmission as shown in FIG. 18. Specifically, in the configuration of the three-speed transmission, as shown in FIG. 18, it may be supposed that the fourth clutch 66 and the second pair of shift gears 90 of the transmission 31 having a configuration shown in FIG. 4 are not provided.

Additionally, the transmission 31 may be configured as a two-speed transmission.

### «Other modified examples»

In the above-described embodiment, an example has been described in which the input shaft 52 and the crank shaft 34 are integrally formed with each other. However, the invention is not limited to this configuration. The input shaft 52 and the crank shaft 34 may be configured as different shafts. In this case, it is desirable that the axis of the input shaft 52 and the axis of the crank shaft 34 are substantially disposed on the straight line.

In the above-described embodiment, an example has been described in which the engine 30 is configured as the single cylinder engine. However, in this invention, the engine 30 is not limited to the single cylinder engine. The engine 30 may be, for example, the multi-cylinder engine such as a two-cylinder engine.

In the above-described embodiment, an example has been described in which the output shaft 33 and the third rotation shaft 64 are separately provided. However, the invention is not limited to this configuration. The output shaft 33 and the third rotation shaft 64 may be common to each other. In other words, the rear wheel 18 may be attached to the third rotation shaft 64.

In the embodiments and the modified examples described above, an example is explained in which the pairs of gears mesh directly with each other. However, the invention is not limited to this structure. The pairs of gears may mesh indirectly via separately provided gears.

### «Definition of terms in the specification»

In the specification, the "motorcycle" is not limited to a motorcycle defined in a narrow sense. The term "motorcycle" indicates a motorcycle defined in a broad sense. More specifically, in the specification, the term "motorcycle" indicates any vehicle that changes direction by banking the vehicle. The term "motorcycle" indicates that at least one of the front wheel and the rear wheel may include a plurality of wheels. More specifically, the "motorcycle" may be a vehicle in which at least one of the front wheel and the rear wheel includes two wheels that are arranged adjacent to each other. Examples of the "motorcycle" include, at least, a motorcycle defined in a narrow sense, a scooter type vehicle, a moped type vehicle, and an off-road vehicle.

The term "centrifugal clutch" refers to a clutch that has an input side clutch member and an output side clutch member, where, when the rotation speed of the input side clutch member is equal to or higher than a predetermined rotation speed, the input side clutch member and the output side clutch member are engaged and joined, and when the rotation speed of the input side clutch member is lower than the predetermined rotation speed, the input side clutch member and the output side clutch member separate and are disengaged.

### [Industrial Applicability]

The invention is applicable to a stepped automatic transmission and a vehicle such as a motorcycle.

## Claims

1. A power unit comprising:
a crank shaft which includes a crank pin connected to a connecting rod;
a stepped automatic transmission which includes an input shaft and an output shaft connected to the crank shaft; and
a casing which accommodates the crank shaft and the stepped automatic transmission, the power unit being attached to a motorcycle so that at least a part of a wheel of the motorcycle is located on the outside of the crank pin in a vehicle width direction at a position in rear of the crank shaft and on the inside of the stepped automatic transmission in the vehicle width direction,
wherein the casing includes a transmission accommodation part having a transmission housing which accommodates the stepped automatic transmission,
wherein the transmission accommodation part includes an inner wall which is located on the inside of the stepped automatic transmission in the vehicle width direction and is located on the outside of the wheel in the vehicle width direction and an outer wall which is located on the outside of the stepped automatic transmission in the vehicle width direction,
wherein the stepped automatic transmission includes a first rotation shaft which is disposed between the input shaft and the output shaft; a first clutch which includes an input-side clutch member rotating together with the input shaft and an output-side clutch member rotatable with respect to the input shaft; a first pair of gears which includes a first shift gear rotating together with the output-side clutch member of the first clutch and a second shift gear disposed on the first rotation shaft so as to mesh with the first shift gear and which transmits a rotation of the input shaft to the first rotation shaft, but does not transmit the rotation of the first rotation shaft to the input shaft; a second pair of gears which includes a third shift gear disposed on the input shaft so as to be rotatable with respect to the input shaft and a fourth shift gear meshing with the third shift gear so as to rotate together with the first rotation shaft and which has a gear ratio smaller than that of the first pair of gears; a second clutch which includes an input-side clutch member rotating together with the third shift gear and an output-side clutch member rotating together with the first shift gear and which is engaged at a rotation speed larger than a rotation speed of the input shaft upon engaging with the first clutch; and a power transmission mechanism which transmits the rotation of the first rotation shaft to the output shaft,
wherein the power unit further comprises: a kick shaft which is rotatably supported to the outer wall; a kick pedal which rotates together with the kick shaft; an intermediate shaft which is provided between the kick shaft and the crank shaft; a pair of kick transmission gears which includes a first kick gear which is provided in the kick shaft so as to be disposed on the outside of the first and second pairs of gears in the vehicle width direction and a second kick gear which is provided in the intermediate shaft so as to mesh with the first kick gear and which transmits a rotation of the kick shaft to the intermediate shaft; and a third kick gear which directly or indirectly meshes with a portion on the inside of the first shift gear of the crank shaft in the vehicle width direction so as to transmit a rotation of the intermediate shaft to the crank shaft, and
wherein at least a part of the second shift gear is located on the outside of the inner wall in the vehicle width direction.

2. The power unit according to Claim 1, further comprising:
an engine which includes the connecting rod and the crank shaft, wherein the engine is a single cylinder engine or a V twin engine.

3. The power unit according to Claim 1, wherein the input shaft is disposed so that an axis of the input shaft and an axis of the output shaft are substantially disposed on the same straight line.

4. The power unit according to Claim 1, wherein the stepped automatic transmission further includes: an intermediate shaft which is additionally provided between the intermediate shaft and the crank shaft; a fourth kick gear which meshes with the third kick gear so as to rotate together with the additional intermediate shaft; a fifth kick gear which rotates together with the additional intermediate shaft; and a sixth kick gear which meshes with the fifth kick gear so as to be unrotatable at a portion on the inside of the first shift gear of the crank shaft in the vehicle width direction.

5. The power unit according to Claim 4, wherein the additional intermediate shaft is a balancer shaft.

6. The power unit according to Claim 1, further comprising:
a starter which rotates the crank shaft.

7. The power unit according to Claim 6, further comprising:
a starter gear which directly or indirectly meshes with a portion on the inside of the first shift gear of the crank shaft in the vehicle width direction so as to transmit a rotation of the starter to the crank shaft.

8. A motorcycle comprising the power unit according to Claim 1.
